# EUROPÄISCHE PATENTSCHRIFT

(11) **EP 0 477 414 B1**
(45) Veröffentlichungstag und Bekanntmachung des Hinweises auf die Patenterteilung: **01.03.1995**
(21) Anmeldenummer: 90118611.4
(22) Anmeldetag: 27.09.1990
(51) Int. Cl.: H04Q 3/545

(54) **Modular strukturiertes digitales Kommunikationssystem mit bedieneraufgabenbezogenen betriebstechnischen Kommunikationsmitteln**
Modularly structured digital communications system with operator task oriented operational communications means
Système de commutation à structure modulaire avec des moyens de communications opérationels orientés pour des tâches opérateurs

(43) Veröffentlichungstag der Anmeldung: 01.04.1992
(73) Patentinhaber: SIEMENS AKTIENGESELLSCHAFT, 80333 München (DE)
(72) Erfinder: Elstner, Siegfried, D-8031 Eichenau (DE)

(56) Entgegenhaltungen:
- EP-A- 0 303 869
- IEEE JOURNAL ON SELECTED AREAS IN COMMUNICATIONS, Band SAC-3, Nr. 4, Juli 1985, Seiten 561-568, New York, US; A.L. JACKSON et al.: "The Harris 20-20 integrated network switch"
- VORTRÄGE DER NTG-FACHTAGUNG, Berlin, 25. - 27. März 1985, Seiten 97-104, VDE-Verlag GmbH, Berlin, DE; M. BUNKENBURG et al.: "Softwarekonzept einer ISDN-Vermittlungsanlage"

## Beschreibung

Modular strukturierte digitale Kommunikationssysteme dienen zur Verbindung von Kommunikationsendgeräten mit vielfältigen Leistungsmerkmalen untereinander und zur Verbindung dieser Endgeräte mit Kommunikationsnetzen, insbesondere öffentlichen Netzen. Ein derartig modular strukturiertes digitales Kommunikationssystem ist aus der europäischen Patentanmeldung 88 112 263.4 (EP-A-0 303 869) bekannt. An dieses Kommunikationssystem können neben digitalen Kommunikationsendgeräten - z. B. ISDN - Kommunikationsendgeräte - auch herkömmliche Endgeräte mit analoger Übertragung - angeschlossen werden. Die Kommunikationssysteme sind des weiteren untereinander, Kommunikationsnetze bildend, vernetzbar. Wesentlicher Bestandteil dieses Kommunikationssystems ist ein zentraler Kommunikationsrechner mit einer Systemdatenbasis und zumindest einem Multitasking-Betriebssystem. Unter einer "Task" ist dabei eine selbständige, unabhängige Ablaufeinheit zu verstehen, die aus einem ablauffähigen Programm sowie einer jeweiligen Ablaufumgebung, z. B. Speicherbelegung oder Gerätezuteilung, besteht. Jede Task befindet sich zu jedem Zeitpunkt in einem der Zustände "Aktiv", "Warten" oder "Ruhe". Tasks können vermittels eines Multitasking-Betriebssystems parallel zueinander ablaufen, wobei dies in der Praxis sowohl mittels mehrerer unabhängig voneinander arbeitender Prozessoren als auch mittels eines einzigen Prozessors in einem Zeitmultiplexverfahren erfolgen kann. Weitere wesentliche Eigenschaften von Tasks sind, daß sie mittels Meldungen miteinander kommunizieren und sich gegenseitig synchronisieren können.

Die betriebstechnische Organisations- und Steuerstruktur des bekannten Kommunikationssystems ist hierbei in drei Taskstrukturen bzw. in drei Strukturebenen unterteilt. In einer Leitungstechnik-Taskstruktur sind endgeräteartenspezifische Betriebstechnik-Programmodule zum Generieren logischer BetriebstechnikBefehle bzw. -Kommandos aus den Kommunikationsendgeräten und/oder Betriebstechnik-Endgeräten vorgenommenen Eingaben und zur Abgabe von aus logischen Betriebstechnik-Meldungen gewonnenen geräteartenspezifischen Einstelldaten für die Kommunikationsendgeräte und/oder Betriebstechnik-Endgeräte vorgesehen. Dies bedeutet, daß die von einem Betriebstechnik-Endgerät abgegebenen Anreize mittels systemspezifischer Parameter in logische, insbesondere betriebstechnische Befehle bzw. Kommandos für den Kommunikationsrechner und logische Meldungen des Kommunikationsrechners in Einstelldaten umgesetzt werden. In einer zweiten Strukturebene, der sogenannten Vermittlungstechnik-Taskstruktur ist ein Koordinierungs-Programmodul zur Steuerung des betriebstechnischen Informations- und Datenflusses vorgesehen. Über das Koordinierungs-Programmodul werden alle betriebstechnischen Zugriffe auf das Kommunikationssystem gesteuert, wobei der betriebstechnische Ablauf bevorzugt "Session"-orientiert erfolgt, um den exklusiven Gebrauch der datentechnischen Verbindungen für den Benutzer zu gewährleisten. Vom Koordinierungs-Programmodul wird jeweils der Aufbau, die zeitliche Überwachung und das Beenden einer "Session" gesteuert. Im Zusammenhang damit verwaltet das Koordinierungs-Programmodul interne Speicherresourcen für die jeweilige "Session".

In einer dritten Strukturebene, der sogenannten betriebstechnischen Applikation-Taskstruktur sind Betriebstechnik-Programmodule zur Abwicklung applikationsorientierter Funktionen, wie z. B. Inbetriebnahme, Wartung, Fernbetriebstechnik, usw., angeordnet. Die Betriebstechnik-Programmodule sind hierbei ebenfalls wieder einem Applikation-Taskorganisationsprogramm hierarchisch untergeordnet. Dem überwiegenden Teil der Betriebstechnik-Programmodule ist jeweils individuell über definierte Datenbasiszugriffsroutinen die Datenbasis zugänglich. Hierbei ist jedem Betriebstechnik-Programmodul ein definierter Funktionsumfang zugeordnet, wobei die Definition der einzelnen Betriebstechnik-Programmodule so erfolgt, daß durch aufeinanderfolgendes Aufrufen der einzelnen Applikations-Programmodule eine große Vielfalt unterschiedlicher komplexer betriebstechnischer Aufträge bearbeitet werden kann. Grundsätzlich können die Betriebstechnik-Programmodule in vier verschiedene Applikationskategorien eingeteilt werden:

### 1. Standardapplikationen

Dies sind Applikationen, die sich auf die Datenbasis des Kommunikationssystems beziehen. Mit Hilfe solcher Applikationen können beispielsweise anlagenspezifische Daten, wie Berechtigungen oder Numerierungsplan, eingerichtet bzw. geändert werden. Der Zugriff auf die Datenbasis erfolgt dabei über die definierten Datenbasis-Zugriffsroutinen.

### 2. Systemapplikationen

Die Basis für diese Applikationen sind die betriebstechnischen "Session"-orientierten Daten; mit Hilfe dieser Applikationen können beispielsweise unterschiedliche Bedieneroberflächenausgestaltungen für bestimmte Ausgabeformate festgelegt werden oder eine Speicherung von aktiven betriebstechnischen Hintergrundprozeduren bzw. ein Aufruf oder eine Unterbrechung derselben erfolgen.

### 3. Hintergrundapplikationen

Solche Hintergrundapplikationen dienen der Aufnahme von Daten eines laufenden betriebstechnischen Auftrags, um beispielsweise ein Betriebstechnik-Endgerät für weitere Eingaben freizugeben, noch ehe der laufende betriebstechnische Vorgang völlig beendet ist.

### 4. Permanente Applikationen

Mit diesen Applikationen, die bevorzugt als eigenständige Task organisiert sind, können beispielsweise selbständige Ausgabeaktivitäten - z. B. Alarmausgaben an Alarmfeldern - ohne Mitwirken des Koordinierung-Programmoduls durchgeführt werden.

Das Multitasking-Betriebssystem des Kommunikationssystems weist des weiteren eine Programm-Busstruktur mit einem kommunikationsdienste- und endgeräteartenunabhängig definierten Übertragungsprotokoll - virtuelles Terminalprotokoll - für zwischen der Leitungstechnik-Taskstruktur und der Koordinierung-Taskstruktur übertragene Meldungen und ein ebenfalls kommunikationsdienste- und endgeräteartenunabhängig definiertes, eine zumindest annähernd steuerzeichenfrei, gedrängte Datenanordnung vorsehendes weiteres Übertragungsprotokoll - virtuelles Applikationsprotokoll - für innerhalb der Applikation-Taskstruktur und zwischen dieser und der Koordinierung-Taskstruktur übertragenen Meldungen auf. Das virtuelle Terminalprotokoll besteht aus sich abwechselnden Sequenzen, Steuerinformationen und Dateninformationen, wobei die Dateninformationen aus üblichen Stringelementen, vorzugsweise im ASCII-Format, bestehen und die Steuerinformationen logische Steuerkriterien für die Ein- und Ausgabe solcher Stringelemente, z. B. Positionieranweisungen, Abbildungsattribute und Feldzuordnungskriterien, enthalten. Das virtuelle Terminalprotokoll dient als Datenschnittstelle eines virtuellen Terminals, als das sich in dieser Schnittstelle jedes Terminal vom und zum System darstellt. Für die Ein- und Ausgabe betriebstechnischer Kommandos bzw. Meldungen sind hierbei insbesondere Betriebstechnik-Endgeräte mit Bildschirmfunktionen und gegebenenfalls "Fenstertechnik" oder "Scrolling" vorgesehen. In der Leitungstechnik-Taskstruktur ist hierfür ein entsprechendes Betriebstechnik-Geräteprogrammodul zur Steuerung eines derartigen Betriebstechnik-Endgerätes vorgesehen. Die Meldungen im virtuellen Terminalprotokoll sind ebenso wie die Meldungen im virtuellen Applikationsprotokoll bevorzugt derart aufgebaut, daß auf ein System-Datenkopfteil mit einer definierten Reihenfolge von Meldungsursprungs- und Meldungszieladressen ein betriebstechnikspezifischer Datenkopfteil mit einer für die beiden Protokolle unterschiedlichen Protokollidentifizierungsinformation, einer Bezeichnung einer Auftrags-"Session", zu der die jeweilige Meldung gehört, und einer das für die Abarbeitung der Auftrags-"Session" notwendige Betriebstechnik-Programmodul bezeichnenden Zieladresse folgt. Über das virtuelle Applikationsprotokoll werden insbesondere die Daten zwischen einem Textprozessor-Programmodul und den Betriebstechnik-Programmodulen ausgetauscht. Die in diesem Protokoll übertragenen Daten sind bereits nach der Syntax überprüft und vorzugsweise komprimiert. Die angegebenen Parameter werden dichtliegend eingetragen, damit bei der Übertragung zu einem jeweils anderen Programmodul nicht das gesamte Protokoll weitergegeben werden muß; die im virtuellen Applikationsprotokoll übertragenen Informationen haben also einen geringeren Umfang als die im virtuellen Terminalprotokoll übertragenen Daten, da bei diesen alle Steuerzeichen enthalten sind. Das virtuelle Applikationsprotokoll ist bevorzugt sprachunabhängig definiert, so daß z.B. Eingaben in einer anderen Sprache als zugehörige Ausgaben erfolgen können.

Das Textprozessor-Programmodul ist in die betriebstechnische Applikation-Taskstruktur eingefügt und dient zur Konvertierung von Meldungen in einem der beiden Übertragungsprotokolle in Meldungen im jeweils anderen Übertragungsprotokoll. Das Textprozessor-Programmodul ist im weiteren Sinne auch als Betriebstechnik-Programmodul aufzufassen, das zur Umsetzung von Kommandoinformationen - z. B. nach CCITT "Man Machine Language" - in applikationsgerechte Dateninformationen dient. Das Textprozessor-Programmodul liefert außerdem die zur Benutzerdialogführung benötigten logischen Steuerkriterien. Weitere bereits erwähnte Teilaufgaben des Textprozessormoduls sind die Syntaxüberprüfung, die Analyse von Kommandos entsprechender Parameterbaumdefinitionen - Parsing -, die Durchführung von Parametereinzelprüfungen gegen applikationsbezogene Datentabellen und die Aufbereitung von Ausgabetexten.

Beim vorliegenden Betriebstechnik-Konzept steht einem Bediener des Kommunikationssystems eine der Anzahl der Betriebstechnik-Programmodule entsprechende Anzahl von betriebstechnischen Befehlen bzw. Kommandos zur Realisierung einer Bedieneraufgabe, z. B. 'Einrichtung eines Teilnehmers', zur Verfügung. Mit jedem dieser betriebstechnischen Befehle muß am Betriebstechnik-Endgerät eine Vielzahl von Parametern mit einer unterschiedlichen Menge von Werten eingegeben werden. Da die einzugebenden Parameter hauptsächlich Inhalte der in der Datenbasis definierten Datenstrukturen repräsentieren, fällt einem Bediener eines derartigen Kommunikationssystems das Verstehen der diversen Datenstrukturen schwer. Dies kann zu Fehlinterpretationen und damit zu Fehlereingaben führen. Des weiteren werden im Rahmen einer Bedieneraufgabe, z. B. "Teilnehmer löschen", überwiegend mehrere betriebstechnische Kommandos eingegeben, wodurch der Eingabeaufwand sich weiter erhöht.

Die der Erfindung zugrundeliegende Aufgabe besteht darin, das eingangs erläuterte modular strukturierte Kommunikationssystem derart zu modifizieren, daß der Eingabeaufwand im Rahmen einer Bedieneraufgabe reduziert und das Verständnis für die einzugebenden betriebstechnischen Informationen bzw. Parameter erhöht wird. Diese Aufgabe wird durch die Merkmale des Anspruchs 1 gelöst.

Der wesentliche Aspekt der Erfindung ist in dem Einfügen eines zusätzlichen Bedienertextinterpreter-Programmoduls in die Applikation-Taskstruktur zu sehen. Mit Hilfe dieses Bedienertextinterpreter-Programmoduls werden bedieneraufgabenbezogene betriebstechnische Anweisungen sowie deren methodische Verknüpfungen einschließlich einer Parameterübergabe, die in einer Bedieneraufgabe zusammengefaßt sind, in kommunikationssystemimmanente betriebstechnische Befehle bzw. Kommandos umgesetzt und deren Ablauf im Kommunikationssystem gesteuert bzw. überwacht. In einer betriebstechnischen Bedieneraufgabe können sehr unterschiedlich umfangreiche bzw. komplex methodisch verknüpfte betriebstechnische Befehle und Meldungen definiert sein. So ist beispielsweise eine wenig umfangreiche bzw. komplexe Bedieneraufgabe in dem Einrichten von Teilnehmeranschlüssen zu sehen. Eine umfangreiche und komplexe Bedieneraufgabe stellt dagegen das Konfigurieren eines Kommunikationssystems dar.

Für die Umsetzung bzw. die Interpretation der bedieneraufgabenbezogenen betriebstechnischen Anweisungen sind Arbeitstabellen vorgesehen, die vor Ablauf des relevanten Bedieneraufgaben-Programmoduls zusammen mit diesem von einer peripheren Programmdatei in den Arbeitsspeicher des Systemrechners des Kommunikationssystems geladen werden. Diese Arbeitstabellen umfassen auch Parameter, die im Rahmen einer Bedieneraufgabe vorspezifizierbar sind. Diese vorspezifizierten, bereits bei der Erstellung der Bedieneraufgaben-Programmodule definierten Parameter müssen im Rahmen einer aktuell ablaufenden Bedieneraufgabe nicht mehr am Betriebstechnik-Endgerät eingegeben werden. Da der überwiegende Teil der Parameter vorspezifizierbar ist, d. h. in den Arbeitstabellen vorgebbar ist, wird der Aufwand hinsichtlich des Eingebens von Parametern im Rahmen einer Eingabe bzw. Initialisierung eines betriebstechnischen Befehls erheblich reduziert.

Des weiteren werden mit Hilfe des Bedienertextinterpreter-Programmoduls ermittelte betriebstechnische Parameter, z. B. als Reaktion des Kommunikationssystems aufgrund einer Eingabe eines betriebstechnischen Befehls, an weitere betriebstechnische Befehle bzw. Kommandos weitergegeben. Ohne das Bedienertextinterpreter-Programmodul müssen alle vom Kommunikationssystem ermittelten und an der Bedieneroberfläche angezeigten Parameter durch den Bediener erneut eingegeben oder in die relevanten betriebstechnischen Befehle eingefügt werden. Darüberhinaus werden auch methodische Verknüpfungen der Parameter oder methodische Verknüpfungen der betriebstechnischen Befehle untereinander mit Hilfe des Bedienertextinterpreter-Programmoduls gesteuert bzw. überwacht und resultierend die entsprechenden weiteren betriebstechnischen oder bedieneroberflächenbezogenen Aktivitäten initialisiert. Durch dieses "Parameter-Durchreichen" wird der Aufwand der am Betriebstechnik-Endgerät erforderlichen Eingaben zusätzlich wesentlich reduziert, zumal die methodische Verknüpfung der betriebstechnischen Befehle bzw. Meldungen ohne Einsatz des Bedienertextinterpreter-Programmoduls durch den Bediener durchgeführt und von diesem zusätzlich überwacht werden müßte. Hierdurch werden vom Bediener verursachte Fehleingaben, insbesondere die methodische Verknüpfung und deren Überwachung betreffend, weitgehend vermieden.

Darüberhinaus sind im Bedienertextinterpreter-Programmodul Erläuterungsinformationen eingefügt, die während des Programmablaufs zur Bedieneroberfläche, z. B. Bildschirm, des Betriebstechnik-Endgerätes gesteuert und dort angezeigt werden. Die Erläuterungsinformationen sind vorzugsweise als Hilfsinformation für den Bediener im Sinne einer Erläuterung der einzugebenden Informationen und Parameter sowie des Programmablaufs in Form verständlicher Informationen bzw. Texte vorgesehen. Hierdurch wird die Identifizierung und damit das Verständnis der aktuell betroffenen Parameter erhöht und folglich auch die Parameterwerteeingabe erleichtert.

Besonders vorteilhaft ist das Bedienertextinterpreter-Programmodul und das Textinterpreter-Programmodul in die betriebstechnische, überwiegend nicht residente Programmodule aufweisende Applikation-Taskstruktur eingefügt - Anspruch 2, da alle Programmodule der Applikation-Taskstruktur - einschließlich eines Applikationsverbindung-Programmoduls - in Abhängigkeit von dem am Betriebstechnik-Endgerät eingegebenen betriebstechnischen Informationen in den Arbeitsspeicher des Systemrechners geladen werden. Dies bedeutet, daß bei einer Eingabe einer bedieneraufgabenbezogenen betriebstechnischen Information, z. B. durch Eingeben einer Titelinformation einer Bedieneraufgabe - z. B. "Teilnehmer einrichten" - das zusätzliche Bedienertextinterpreter-Programmodul geladen wird.

Mit Hilfe des zusätzlichen Bedienertextinterpreter-Programmoduls werden die von einem Bedieneraufgaben-Programmodul geladenen bedieneraufgabenbezogenen betriebstechnischen Anweisungen in betriebstechnische Befehle umgesetzt und in einer Arbeitstabelle (step tables) hinterlegt. Diese betriebstechnischen Befehle entsprechen inhaltlich und formal den betriebstechnischen Befehlen, die durch einen Bediener an einem Betriebstechnik-Endgerät eines Kommunikationssystems eingegeben werden, zu dessen Ausstattung kein Bedienertextinterpreter-Programmodul gehört. Folglich werden die mit Hilfe des Bedienertextinterpreter-Programmoduls umgesetzten betriebstechnischen Befehle innerhalb der Applikation-Taskstruktur mit Hilfe der vorhandenen Protokolle an das Textprozessor-Programmodul im Sinne einer weiteren Umsetzung in kommunikationssystemimmanente betriebstechnische Anweisungen weitergeleitet. Dies bedeutet, daß die bereits im Kommunikationssystem implementierten Programmodule und Protokolle unverändert weiter benutzbar sind. Somit kann ein derartiges Kommunikationssystem sehr einfach mit einem Bedienertextinterpreter-Programmodul ergänzt werden.

Das Laden des Bedienertextinterpreter-Programmoduls bzw. von Bedieneraufgaben-Programmodulen, aber auch von anderen in der Applikation-Taskstruktur angeordneten, nicht residenten Programmodulen wird zusätzlich zu dem Koordinierung-Programmodul mit Hilfe eines Dateiverwaltung-Programmoduls, eines Speicher-Programmoduls und eines Applikationsverbindung-Programmoduls gesteuert.

Das Speicher-Programmodul übernimmt hierbei die Steuerung von Such-, Lade- und Schreibaufträgen in einen Dateien aufnehmenden peripheren Speicher, wobei die von weiteren Programmodulen oder durch den Bediener eingegebenen initialisierten einzelnen Such-, Lade- und Schreibaufträge über das Koordinierung-Programmodul an das Speicher-Programmodul gelangen. Das Speicher-Programmodul kann dabei derart strukturiert sein, daß es Warteschlangen für vom Dateiverwaltung-Programmodul initialisierte derartige Aufträge auf- und abbaut.

Das in die Koordinierung-Taskstruktur eingefügte Dateiverwaltung-Programmodul unterstützt das Koordinierung-Programmodul insbesondere beim Laden bzw. Speichern und Aktualisieren von Arbeitstabellen. Dieses Datei-Programmodul ist hierarchisch einem Datei-Taskorganisationsprogramm untergeordnet.

Das Applikationsverbindung-Programmodul steuert das Laden der Programmodule und der Arbeitstabellen innerhalb der Applikation-Taskstruktur. Darüberhinaus übernimmt das Applikationsverbindung-Programmodul die Ansteuerung der unterschiedlichen Applikation-Programmodule und sieht in diesem Zusammenhang vor, daß in die betriebstechnische Applikation-Taskstruktur ein einem Applikationsverbindung-Taskorganisationsprogramm hierarchisch untergeordnetes Applikationsverbindung-Programmodul zum Aufbau und zur Verwaltung der Verbindung des Koordinierung-Programmoduls mit einem der Betriebstechnik-Programmodule eingefügt ist. In das Applikationsverbindung-Programmodul ist dann vorzugsweise die Prüfung auf das Vorhandensein bestimmter angesprochener Betriebstechnik-Programmodule in der betriebstechnischen Applikation-Taskstruktur und - wie bereits erläutert - das Einladen von Programmodulen bzw. Arbeitstabelle aus peripheren Dateien einbezogen.

Für die Kommunikation des Kommunikationssystems mit einem aus einer Bildschirmeinrichtung und einer Eingabetastatur gebildeten Videobetriebsterminal ist ein Videoterminal-Geräteprogrammodul vorgesehen. Mit Hilfe dieses Videoterminal-Geräteprogrammoduls werden die an dem Videobetriebsterminal vorgenommenen Eingaben bzw. Ausgaben in bedieneraufgabenbezogene betriebstechnische Anweisungen oder betriebstechnische Meldungen konvertiert. Hierbei werden die von dem Videobetriebsterminal stammenden Anreize bzw. die von dem betriebstechnischen Programmodul übermittelten Meldungen bewertet und in kommunikationssystemimmanente betriebstechnische Anweisungen oder Befehle bzw. in videobetriebsterminalgerechte Informationen umgesetzt. Des weiteren wird mit Hilfe dieses Videoterminal-Geräteprogrammoduls eine maskenorientierte Anzeige bzw. Wiedergabe von betriebstechnischen Informationen an der Bildschirmeinrichtung des Videobetriebsterminals gesteuert.

Für die Ein- bzw. Ausgabe bedieneraufgabenbezogener betriebstechnischer Anweisungen bzw. Meldungen wird eine individuell maskenkonfigurierbare Bedieneroberfläche eingesetzt. Dies bedeutet, daß die für die Eingabe bzw. Anzeige von betriebstechnischen Anweisungen, Befehlen und Meldungen vorgesehenen Bildschirmbereiche hinsichtlich ihrer Bildschirmfläche veränderbar, d. h. vergrößerbar, verkleinerbar und ausblendbar sind. Des weiteren ist im Rahmen der Eingabe von bedieneraufgabenbezogenen Anweisungen ein Parametereingabebereich für die Eingabe der Parameter, ein Bedieneraufgabenbereich für die Eingabe der Bedieneraufgabenanweisungen, ein Eingabebereich für die direkte Eingabe von betriebstechnischen Befehlen, ein Ausgabebereich für die Anzeige von im Rahmen eines Bedienertextinterpreter-Programmablaufs gebildeten sowie direkt eingegebenen betriebstechnischen Meldungen, ein Funktionstastenbereich für die Eingabe von Funktionstasteninformationen und ein Fehlerbereich für die Ausgabe betriebstechnischer Fehlermeldungen vorgesehen.

Das Bedieneraufgaben-Programmodul ist im wesentlichen durch einen Erklärungsteil, durch einen Anweisungsteil und durch einen Funktionsteil bestimmt. Im Erklärungsteil werden Variablen, Felder und symbolische Namen definiert. Hierbei müssen alle symbolischen Namen und Variablen, die innerhalb des Anweisungsteils benutzt werden, vereinbart sein. Die Variablen dienen der Steuerung des Bedieneraufgaben-Programmoduls und der Belegung von Parameterwerten der betriebstechnischen Befehle. Hierbei müssen ebenfalls alle Variablen vereinbart werden, unabhängig davon, ob sie mit einem Wert belegt werden oder nicht. Durch Variable werden beispielsweise Werte von Parametern zugewiesen, z. B. im Sinne einer Parametereingabe an einem Betriebstechnik-Endgerät, und methodische Verknüpfungen der betriebstechnischen Befehle durchgeführt. Des weiteren sind im Anweisungsteil Anweisungen bzw. Meldungen vorgesehen, mit deren Hilfe Informationen aus der Datenbasis gelesen, betriebstechnische Meldungen ausgewertet und Fehlermeldungen während der Ausführung eines Bedieneraufgaben-Programms angezeigt werden können. Im Funktionsteil sind Funktionen definiert, die im Anweisungsteil durch einen vorgegebenen Ausdruck aufgerufen werden. Vorwiegend sind öfter aufgerufene Standardfunktionen, wie z. B. formatiertes Ausgeben von Zeichenketten, im Funktionsteil festgelegt. Der Erklärungsteil sowie der Funktionsteil müssen nicht generell realisiert werden, d. h. sind optional einsetzbar.

Die betriebstechnischen Programmodule sind in Abhängigkeit von der gewählten Betriebsart - On Line- oder Off Line-Modus - in einem prozessorgesteuerten Betriebstechnik-Endgerät - z. B. einem Personal Computer - anordenbar. Der Off Line-Modus wird beispielsweise zur ursprünglichen Konfiguration eines Kommunikationssystems eingesetzt. Hierbei wird die Datenbasis extern in einem Personal Computer erstellt und anschließend in das zu konfigurierende Kommunikationssystem geladen. Im On Line-Modus wird mit Hilfe der in dem prozessorgesteuerten Betriebstechnik-Endgerät angeordneten Programmodule die Datenbasis eines aktiven Kommunikationssystems manipuliert bzw. gelesen oder auch konfiguriert. Die Kommunikation mit einem derartigen prozessorgesteuerten Betriebstechnik-Endgerät wird mit Hilfe eines RS232-Schnittstellen-Programmoduls durchgeführt. Dieses RS232-Schnittstellen-Programmodul dient vorzugsweise zur physikalischen Konvertierung einer RS232-Schnittstelle im Sinne des Übermittelns von betriebstechnischen Informationen. Bei dieser Datenübertragungsschnittstelle handelt es sich um eine international standardisierte Schnittstelle, die im wesentlichen aus asymmetrischen Empfangs- und Datenleitungen sowie aus wenigen zusätzlichen asymmetrischen Steuerleitungen zum Senden und Empfangen der Daten gebildet ist.

Die logische Steuerung dieser RS232-Schnittstelle übernimmt ein in der Koordinierung-Taskstruktur angeordnetes Transferprogrammodul. Mit Hilfe dieses Transferprogrammoduls wird die RS232-Schnittstellen-spezifische Signalisierung gesteuert. Die von einem prozessorgesteuerten Betriebstechnik-Endgerät übermittelten Informationen gelangen über das RS232-Schnittstellen-Programmodul und das Transferprogrammodul an das Koordinierung-Programmodul und werden mit Hilfe des Applikationsverbindung-Programmoduls zu den betriebstechnischen Programmodulen, wie beispielsweise Textinterpreter-Programmodul oder Bedienertextinterpreter-Programmodul, im Sinne einer Aktivierung eines Betriebstechnik-Programmoduls gesteuert.

Im folgenden wird ein Ausführungsbeispiel der Erfindung anhand von 7 Figuren näher erläutert.

Dabei zeigen
- FIG 1: Organisations- und Steuerstruktur für den betriebstechnischen Informations- und Datenfluß eines digitalen Kommunikationssystems,
- FIG 2: Informations- bzw. Datenfluß innerhalb der betriebstechnischen Organisations- und Steuerstruktur während der Durchführung einer Bedieneraufgabe,
- FIG 3: ein Blockschaltbild der physikalischen Verbindung des Kommunikationssystems mit dem Betriebstechnik-Endgerät,
- FIG 4: die maskenorientierte Bedieneroberfläche des Betriebstechnik-Endgerätes,
- FIG 5: den Aufbau des virtuellen Applikationsprotokolls,
- FIG 6: den Aufbau des virtuellen Terminalprotokolls,
- FIG 7: den prinzipiellen Aufbau eines Bedieneraufgaben-Programmoduls, und
- FIG 8A-8C: das Programmlisting des Bedieneraufgaben-Programmoduls "Teilnehmer löschen".

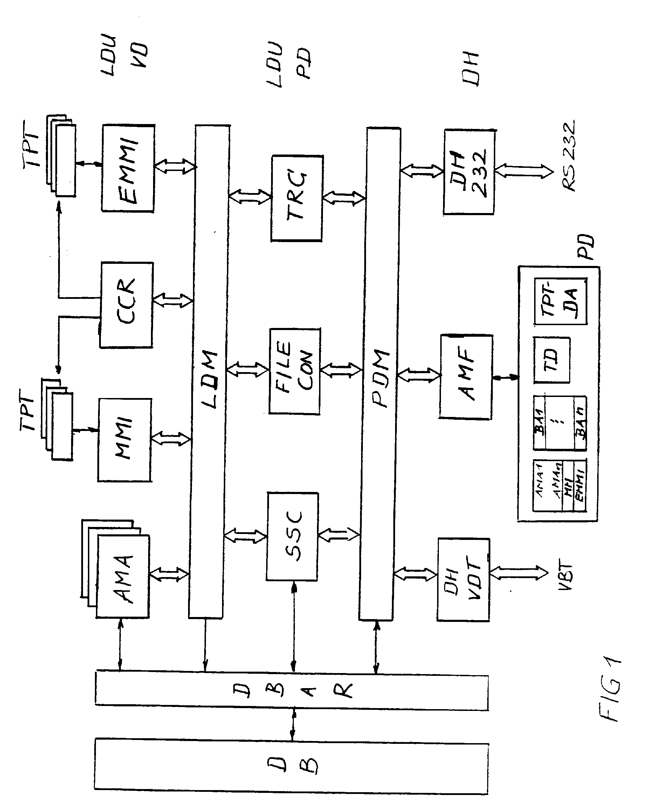

Die in der FIG 1 dargestellten Organisations- und Steuerstrukturen für den betriebstechnischen Daten- und Informationsfluß innerhalb eines modular strukturierten Kommunikationssystems weist drei Steuerebenen mit je einer Taskstruktur DH, LDU PD, LDU VD auf, zwischen denen Meldungen über eine Programm-Busstruktur PDM, LDM ausgetauscht werden. In der peripherienahen Leitungstechnik-Taskstruktur DH sind drei jeweils endgeräteartenspezifische Betriebstechnik-Geräteprogrammodule DH VDT, AMF, DH232 angeordnet, von denen das eine DH VDT einem Videobetriebsterminal VBT, das zweite AMF peripheren Dateien PD und das dritte DH232 einer Datenübermittlungsschnittstelle RS232 zugeordnet ist. Der Austausch von Meldungen zwischen den Betriebstechnik-Programmodulen DH VDT, AMF, DH232 und der nachgeordneten betriebstechnischen Koordinierung-Taskstruktur LDU PD erfolgt in einem definierten Übertragungsprotokoll - virtuelles Terminalprotokoll - über einen Programmbus PDM der Programmbusstruktur PDM, LDM. Funktionell wesentlicher Bestandteil der betriebstechnischen Koordinierung-Taskstruktur LDU PD ist ein Koordinierung-Programmodul SSC, mit dessen Hilfe im wesentlichen der betriebstechnische Daten- und Informationsfluß innerhalb des Kommunikationssystems gesteuert wird.

Ein ebenfalls in der betriebstechnischen Koordinierung-Taskstruktur LDU PD angeordnetes Dateiverwaltung-Programmodul FILE CON dient der Steuerung des Zugangs von Programmodulen der betriebstechnischen Applikation-Taskstruktur LDU VD zu peripheren Dateien PD.

Die betriebstechnische Applikation-Taskstruktur LDU VD ist durch eine größere Anzahl von Betriebstechnik-Programmodulen AMA gebildet. Diese Betriebstechnik-Programmodule AMA dienen zur Abwicklung von betriebstechnischen Aufgaben im Zusammenhang mit der Inbetriebnahme, der Wartung und der Verwaltung des digitalen Kommunikationssystems.

Ein weiterer wesentlicher Bestandteil der betriebstechnischen Applikation-Taskstruktur LDU VD ist ein Textprozessor-Programmodul MMI. Wesentliche Aufgaben des Textprozessor-Programmoduls MMI ist die Konvertierung von Meldungen im virtuellen Terminalprotokoll in Meldungen eines virtuellen Applikationsprotokolls und umgekehrt; während das virtuelle Terminalprotokoll für Meldungen zwischen der Leitungstechnik-Taskstruktur DH und der betriebstechnischen Koordinierung-Taskstruktur LDU PD sowie für Meldungen vom Koordinierung-Programmodul SSC zum Textprozessor-Programmodul MMI benutzt wird, werden alle Meldungen - mit Ausnahme von vom virtuellen Applikationsprotokoll in das virtuelle Terminalprotokoll konvertierten Meldungen - vom Textprozessor-Programmodul MMI an das Koordinierung-Programmodul SSC im virtuellen Applikationsprotokoll übertragen, das sich gegenüber dem virtuellen Terminalprotokoll durch eine verdichtete Datenfolge und damit geringere Länge auszeichnet. Ein weiteres wesentliches Programmodul der betriebstechnischen Applikation-Taskstruktur LDU VD ist ein zusätzliches Bedienertextinterpreter-Programmodul EMMI. Die Aufgabe dieses Bedienertextinterpreter-Programmoduls EMMI besteht in der Konvertierung aufgabenbezogener betriebstechnischer, am Betriebstechnik-Endgerät eingegebener Anweisungen in betriebstechnische Befehle, die anschließend direkt im Sinne einer Protokollkonvertierung an das Textprozessor-Programmodul weitergeleitet werden.

Sowohl dem Textinterpreter-Programmodul MMI als auch dem Bedienertextinterpreter-Programmodul EMMI sind jeweils Arbeitstabellen TBT zugeordnet, in denen die für die aktuelle Umsetzung erforderlichen Konvertierungs-Algorithmen und die nach der Interpretierung gebildeten Kommandostapel hinterlegt sind.

Ebenfalls in der betriebstechnischen Applikation-Taskstruktur LDU VD ist ein Applikationsverbindung-Programmodul CCR angeordnet, das zum Aufbau und zur Verwaltung der Verbindung des Koordinierung-Programmoduls SSC mit einem der Betriebstechnik-Programmodule AMA dient. Darüberhinaus ist das Applikationsverbindung-Programmodul CCR an dem Laden der Programmodule der Applikation-Taskstruktur LDU VD sowie an dem Nachladen von Arbeitstabellen TBT aus peripheren Dateien PD über das Datei-Programmodul FILE CON beteiligt.

Alle in der betriebstechnischen Applikation-Taskstruktur LDU VD vorgesehenen Programmodule AMA, MMI, EMMI - ausschließlich des Applikationsverbindung-Programmoduls CCR - sind nicht resident im Kommunikationssystem gespeichert. Die Betriebstechnik-Programmodule AMA, MMI, EMMI werden in Abhängigkeit der am Betriebstechnik-Endgerät eingegebenen betriebstechnischen Anweisungen oder betriebstechnischen Befehle in die Applikation-Taskstruktur LDU VD geladen. So wird nach dem Eingeben bedieneraufgabenbezogener Anweisungen zu deren Interpretation das zusätzliche Bedienertextinterpreter-Programmodul EMMI anschließend zur Interpretation des betriebstechnischen Kommandostapels das Textinterpreter-Programmodul MMI und daraus resultierend das entsprechende Betriebstechnik-Programmodul AMA in die Applikation-Taskstruktur LDU VD bzw. den Arbeitsspeicher des Kommunikationssystems geladen.

Die in einer peripheren Speichereinrichtung hinterlegten peripheren Dateien PD umfassen n Bedieneraufgaben-Programmodule BA1... BAn, Textdateien TD, Arbeitstabellen-Dateien TBT-DA und die nicht residenten Programmodule AMA1...AMAn, MMI, EMMI der Applikation-Taskstruktur LDU VD. Für jede Bedieneraufgabe ist ein separates Bedieneraufgaben-Programmodul BA vorgesehen. Eine Bedieneraufgabe stellt beispielsweise das Abfragen von Rufnummern dar. Hierbei werden alle Rufnummern der maximal möglichen, d. h. an das Kommunikationssystem anschließbaren Teilnehmer, angezeigt. In den Textdateien TD sind Textstrings hinterlegt, die im Rahmen ablaufender Programmodule von diesen im Sinne einer erläuternden zusätzlichen Anzeige an die Bedieneroberfläche gesteuert werden. In der Arbeitstabellen-Datei TBT-DA sind sowohl die Arbeitstabellen TBT für das Textinterpreter-Programmodul MMI als auch für das zusätzliche Bedienertextinterpreter-Programmodul MMI hinterlegt.

Die prinzipielle Organisations- und Steuerstruktur der Leitungstechnik-Programmodule DH VDT, AMF, DH232 und die der Leitungstechnik-Strukturebene zugeordnete Systemumgebung ist aus der US-Patentschrift 4 903 258 bekannt.

Des weiteren ist aus dieser US-Patentschrift 4 903 258 die prinzipielle Organisations- und Steuerstruktur des Koordinierung-Programmoduls SSC äquivalent realisierten Vermittlungstechnik-Programmoduls sowie die prinzipielle Hardware-Struktur, die Systemrechnerstruktur mit den Ein-/Ausgaberechnern und die Hardware-Struktur der ankoppelbaren peripheren Module des diesem Ausführungsbeispiels zugrundegelegten Kommunikationssystem bekannt.

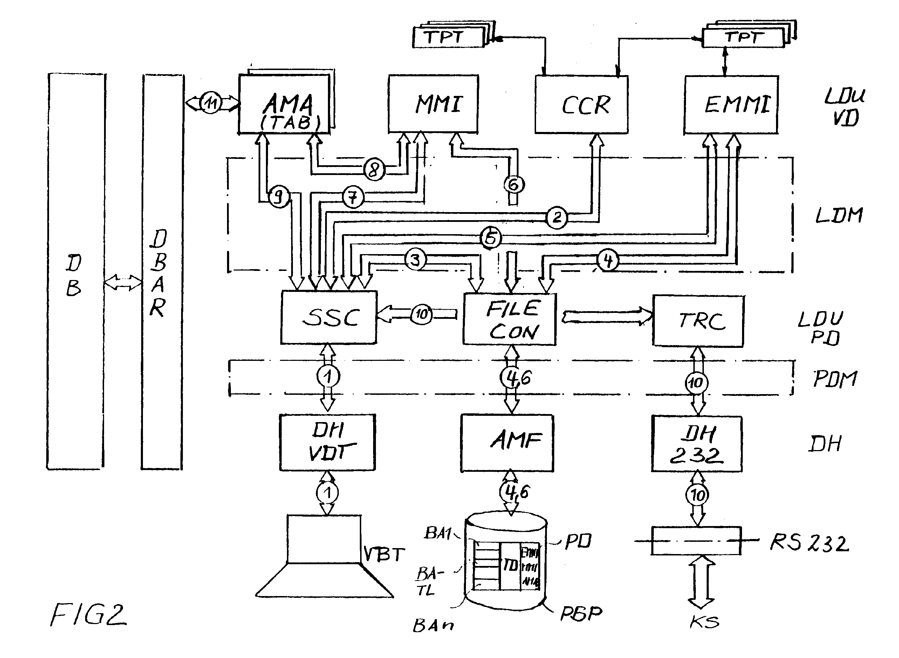

Anhand der FIG 2, in der die wesentlichen Strukturbestandteile des Kommunikationssystems gemäß FIG 1 noch einmal dargestellt sind, wird der Meldungsfluß beschrieben, der bei Durchführung einer bedieneraufgabenbezogenen betriebstechnischen Anweisung stattfindet.

Für das Ausführungsbeispiel sei angenommen, daß eine Bedieneraufgabe "Teilnehmerdaten löschen" auszuführen ist. Voraussetzung hierfür ist das Vorhandensein eines Bedieneraufgaben-Programmoduls BA-TL "Teilnehmerdaten löschen". Ein derartiges Bedieneraufgaben-Programmodul BA-TL ist vorab mit Hilfe eines geeigneten Editorprogramms einmalig für alle mit der erfindungsgemäßen Organisations- und Softwarestruktur ausgestatteten Kommunikationssysteme zu erstellen.

Des weiteren sei für das Ausführungsbeispiel angenommen, daß die Bedieneraufgabe im On-Line-Modus mit Hilfe eines Personal Computers durchgeführt wird. Hierbei sind alle Programmodule der drei Strukturebenen, ausschließlich der betriebstechnischen Programmodule AMA sowie des Datenbasiszugriff-Programmoduls DBAR und die Datenbasis DB in einem Personal Computer implementiert. Dieser Personal Computer ist mit zumindest einem Multitasking-Betriebssystem simulierenden Betriebssystem ausgestattet. Die die Betriebstechnik betreffenden Programmodule AMA, MMI, EMMI sind auch im Kommunikationssystem implementierbar, wobei die Kommunikation mit dem Kommunikationssystem dann über eine einfache, d. h. nicht prozessorgesteuerte Datensichtstation erfolgt. Diese Datensichtstation ist hierbei über ein geeignetes Videobetriebsterminal-Geräteprogrammodul DH VDT an das Kommunikationssystem anzuschließen.

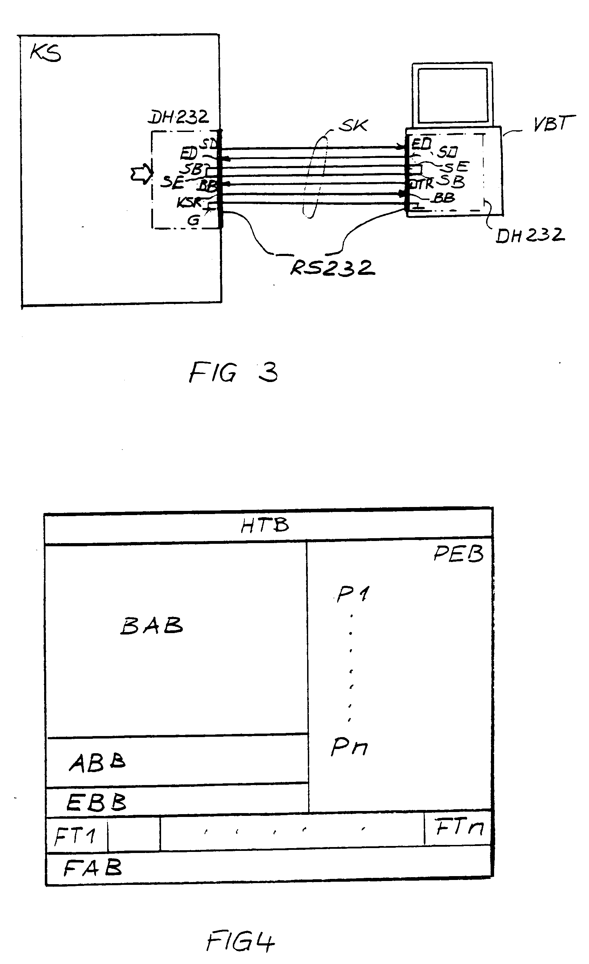

Das Betriebstechnik-Endgerät VBT, ob Personal Computer oder Datensichtstation wird über eine die prozeduralen und physikalischen Eigenschaften bestimmende RS232-Schnittstelle mit dem Kommunikationssystem KS verbunden - siehe FIG 3. Diese RS232-Schnittstelle entspricht dem internationalen Standard RS232 und ist für die Übertragung von Daten bis zu einer Übertragungsgeschwindigkeit von 1 Mbit/s festgelegt. Die hinsichtlich der elektrischen Eigenschaften asymmetrische RS232-Schnittstelle ist für die bidirektionale, serielle und gleichzeitige Übermittlung von Daten geeignet. Hierfür ist an der kommunikationssystemseitig und terminalseitig jeweils eine Empfangsleitung ED und eine Sendeleitung SD vorgesehen. Die nichtbenutzten Schnittstellenleitungen - Sendeteil umschalten SE und Sendebereitschaft SB - sind beidseitig miteinander verbunden. Jeweils im Kommunikationssystem KS und im Betriebstechnik-Endgerät VBT ist eine die Betriebsbereitschaft anzeigende Schnittstellenleitung DTR, KSR vorgesehen, wobei diese jeweils mit einer die Betriebsbereitschaft erkennenden Schnittstellenleitung BB der gegenüberliegenden RS232-Schnittstelle RS232 verbunden ist. Die Leitungen zwischen den einzelnen Schnittstellenleitungen ED, SD, SE, SB, DTR, KSR, BB, G sind zu einem Schnittstellenkabel zusammengefaßt. Die RS232-Schnittstelle ist äquivalent zu den bei CCITT standardisierten V.24-/V.28-Schnittstellen zur Datenübertragung.

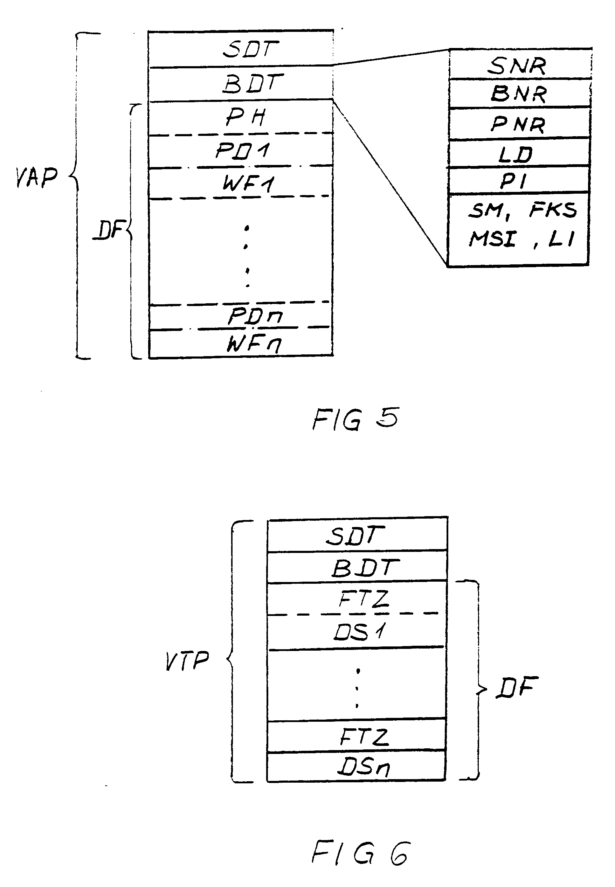

Für die Initialisierung bzw. das Eingeben der Parameter bzw. Anweisungen ist an der Bedieneroberfläche eines Videobetriebsterminals VBT eine Maskentechnik vorgesehen. FIG 4 zeigt beispielsweise eine derartige Maske für die Eingabe von Anweisungen und Parametern sowie für die Anzeige von betriebstechnischen Meldungen und Fehlermeldungen und Erläuterungsinformationen. In einem dem oberen Ende der Maske zugeordneten Titelbereich HTB ist die Art der Maske definiert - im Ausführungsbeispiel eine Betriebstechnikmaske. Die in FIG 4 dargestellte Maske enthält des weiteren einen Bedieneraufgabenbereich BAB, einen Ausgabebereich ABB für kommunikationssystemimmanente betriebstechnische Meldungen, einen Eingabebereich EBB für betriebstechnische Befehle, einen Parametereingabebereich PEB, mehreren Funktionstastenbereiche FT1...FTn und einen Fehlerausgabebereich FAB. Jeder dieser Bereiche ist senkrecht und waagerecht "scrollbar" und hinsichtlich seiner Größe individuell konfigurierbar. Die Texte für den Titelbereich HTB, die Funktionstastenbereiche FT1...FTn, Hilfstexte und Hinweis- und Fehlermeldungen sind mittels Definierungsdateien einstellbar. Der Bedieneraufgabenbereich BAB wird durch die aktuell ablaufende Bedieneraufgabe - im Ausführungsbeispiel angenommen "Teilnehmerdaten löschen" - angezeigt. Im Parametereingabebereiche PEB sind die Parameter P1...Pn durch Eingabemittel - im Ausführungsbeispiel z. B. durch eine Eingabetastatur - einzufügen. Zusätzlich werden in diesen Parametereingabebereich PEB die einzugebenden Parameter P1...Pn beschreibende bzw. erläuternde Informationen, meist im oberen Bereich, eingeblendet. Mehrere Parameter P1...Pn werden über listenartig strukturierte Bereiche eingegeben.

Einfache betriebstechnische Befehle, die nicht im Rahmen einer Bedieneraufgabe an das Kommunikationssystem KS zu übermitteln sind, sind über einen Befehlseingabebereich EBB eingebbar. Analog hierzu werden in einem Betriebstechnikausgabebereich ABB die beispielsweise aufgrund eines betriebstechnischen Befehls abgegebenen betriebstechnischen Meldungen - auch im Rahmen eines Bedieneraufgaben-Programmablaufs - angezeigt. In einem mehrere Tastenfunktionsfelder FT1...FTn umfassenden Funktionstastenbereich ist den einzelnen Funktionstastenfeldern FT1...FTn jeweils eine der Steuerung der Maske und der Bedieneraufgabe dienende Funktion zugeordnet. Mit Hilfe dieser Funktionstastenfelder FT1... FTn können beispielsweise die einzelnen Bereiche der Maske aktiviert bzw. deaktiviert sowie auch Help- und Editierfunktionen aufgerufen werden, wobei nicht alle Funktionstastenfelder FT1... FTn zu jedem Zeitpunkt aktivierbar sind. Mit einem der Funktionstastenfelder FT1...FTn wird das Betriebstechnik-Endgerät VBT in den On-Line- oder Off-Line-Modus gesteuert, aber auch der Eingabemodus wie einfache betriebstechnische Befehle oder bedieneraufgabenbezogene betriebstechnische Anweisungen eingestellt.

Die vom Kommunikationssystem KS an das Betriebstechnik-Endgerät VBT übermittelten Fehlermeldungen werden in dem Fehleranzeigebereich FAB der Maske angezeigt.

Eine Bedieneraufgabe wird durch Eingeben der Bezeichnung der Bedieneraufgabe - im Ausführungsbeispiel "Teilnehmerdaten löschen" - initialisiert. Die am Videobetriebsterminal VBT eingegebenen Informationen werden im Videobetriebsterminal-Geräteprogrammodul DH VDT in der Leitungstechnik-Taskstrukturebene DH gesammelt und nach Erhalt eines Sendekriteriums über den Programmbus PDM der Programmbusstruktur PDM, LDM an das Koordinierungs-Programmodul SSC in der betriebstechnischen Koordinierung-Taskstrukturebene LDU PD weitergeleitet. Die Meldungsübertragung über den Programmbus PDM erfolgt im virtuellen Terminalprotokoll - siehe FIG 2 (1).

Im Koordinierung-Programmodul SSC wird festgestellt, daß eine bedieneraufgabenbezogene betriebstechnische Anweisung übermittelt wurde. Mit Hilfe des Koordinierung-Programmoduls SSC und des Applikationsverbindung-Programmoduls CCR wird überprüft, ob im Arbeitsspeicher des Kommunikationssystems KS ein im Sinne des Interpretierens der bedieneraufgabenbezogenen Anweisungen erforderliches Bedienertextinterpreter-Programmodul EMMI gespeichert ist - siehe FIG 2 (2).

Für das Ausführungsbeispiel sei des weiteren angenommen, daß das Bedienertextinterpreter-Programmodul EMMI nicht im Arbeitsspeicher des Kommunikationssystems KS hinterlegt ist. Daraufhin wird im Koordinierung-Programmodul SSC das Laden des Bedienertextinterpreter-Programmoduls EMMI einschließlich der Arbeitstabellen TPT veranlaßt. Hierzu wird im Koordinierung-Programmodul SSC eine entsprechende Ladeanforderung gebildet und mit Hilfe des virtuellen Applikationsprotokolls an das Dateiverwaltung-Programmodul FILE CON übermittelt - siehe FIG 2 (3).

Aus dieser Anforderung werden im Dateiverwaltung-Programmodul FILE CON die entsprechenden Such- und Ladeaufträge bzw. Meldungen gebildet und an ein Speicher-Programmodul AFM übermittelt. Im Speicher-Programmodul AFM werden aus den Such- und Lademeldungen die zur Ansteuerung der peripheren Dateien PD im Sinne des Ladens des Bedienertextinterpreter-Programmoduls EMMI gebildet und mit diesen die periphere Speichereinrichtung PSP angesteuert. Die periphere Speichereinrichtung PSP stellt beispielsweise eine Floppy Disk-Speichereinrichtung oder eine Festplatten-Speichereinrichtung dar. Zuerst wird das Bedienertextinterpreter-Programmodul EMMI zusammen mit den Arbeitstabellen TBT in den Arbeitsspeicher des Kommunikationssystems geladen - siehe FIG 2 (4). Anschließend wird das Bedieneraufgaben-Programmodul BA-TL schrittweise geladen und sofort unter Steuerung des Koordinierung-Programmoduls mit Hilfe des Bedienertextinterpreter-Programmoduls EMMI interpretiert - siehe FIG 2 (3, 4, 5). Die interpretierten bedieneraufgabenbezogenen betriebstechnischen Anweisungen werden in einer Arbeitstabelle TPT hinterlegt. Die im Bedieneraufgaben-Programmodul BA-TL enthaltenen und der Erläuterung der aktuellen Aktivitäten dienenden Informationen werden mit Hilfe des Koordinierung-Programmoduls SSC und des Videobetriebsterminal-Geräteprogrammodul DH VDT in den Parametereingabebereich PEB der Bedieneroberfläche des Betriebstechnik-Endgerätes gesteuert bzw. dort angezeigt - siehe FIG 2 (1, 3, 5). In der Arbeitstabelle TBT sind betriebstechnische Befehle bzw. Kommandos in einer Form hinterlegt, wie sie von einem Bediener ohne Einsatz eines Bedienertextinterpreter-Programmoduls EMMI eingegeben werden. Für die Konvertierung dieser betriebstechnischen Befehle in kommunikationssystemimmanente betriebstechnische Anweisungen ist ein Textinterpreter-Programmodul MMI vorgesehen. Demzufolge ist dieses Textinterpreter-Programmodul MMI mit Hilfe des Koordinierung-Programmoduls SSC, des Dateiverwaltung-Programmoduls FILE CON und des Speicher-Programmoduls AMF von den peripheren Dateien PD - wie bereits erläutert - zu laden- siehe FIG 2 (2, 3, 6). Hierbei wird gegebenenfalls das vorhandene Bedienertextinterpreter-Programmodul EMMI überschrieben. Mit Hilfe dieses Textinterpreter-Programmoduls MMI werden die in der entsprechenden Arbeitstabelle TBT hinterlegten betriebstechnischen Befehle interpretiert, d. h. in kommunikationssystemimmanente betriebstechnische Information umgesetzt und mit Hilfe des Koordinierung-Programmoduls SSC in einer Betriebstechnik-Tabelle AMA-TAB hinterlegt - siehe FIG 2 (7, 8).

Anschließend werden diese hinterlegten betriebstechnischen Anweisungen unter Steuerung des Koordinierung-Programmoduls SSC des Transfer-Programmoduls TRC und des RS232-Schnittstellenprogrammoduls DH-232 an die RS232-Schnittstelle des Bedientechnik-Endgerätes - im Ausführungsbeispiel ein durch einen Personal Computer realisiertes Videobetriebsterminal VBT - gesteuert - siehe FIG 2 (9, 10). Über diese Schnittstelle RS232 gelangen die kommunikationssystemimmanenten betriebstechnischen Anweisungen an eine gleichartig ausgebildete RS232-Schnittstelle des nicht dargestellten Kommunikationssystems KS. Unter Steuerung eines im Kommunikationssystem KS angeordneten gleichartig aufgebauten Koordinierung-Programmoduls SSC wird der betriebstechnische Befehl an ein in der Betriebstechnik-Taskstruktur LDU VD gespeichertes Betriebstechnik-Programmodul AMA gesteuert.

Die interpretierten betriebstechnischen Befehle werden alle im virtuellen Applikationsprotokoll übermittelt. Ein im Rahmen des Ausführungsbeispiels erforderlicher betriebstechnischer Befehl stellt beispielsweise das Lesen eines Passwortes aus der Datenbasis dar, das dann anschließend mit dem eingegebenen verglichen wird, wodurch nur bei Übereinstimmung der beiden Passwörter ein weiteres Durchführen der Bedieneraufgabe ermöglicht wird. Für diesen betriebstechnischen Auftrag "Passwortlesen" ist im Kommunikationssystem KS unter Steuerung eines Koordinierung-Programmoduls SSC ein hierfür vorgesehenes Betriebstechnik-Programmodul AMA in die Applikation-Taskstruktur bzw. in den Arbeitsspeicher des Systemrechners zu laden. Anschließend wird mit Hilfe dieses Betriebstechnik-Programmoduls AMA und eines Datenbasiszugriffs-Programmoduls DBAR das Passwort aus der Datenbasis gelesen und über die RS232-Schnittstelle RS232 zum Personal Computer bzw. Betriebstechnik-Endgerät übermittelt und dort sowohl in der Betriebstechnik-Tabelle hinterlegt als auch im Sinne einer Anzeige an das Videobetriebsterminal VBT weitergeleitet.

Nach Erledigung dieses betriebstechnischen Auftrages wird erneut mit Hilfe des Koordinierung-Programmoduls SSC, des Dateiverwaltung-Programmoduls FILE CON und des Speicher-Programmoduls AMF das Bedienertextinterpreter-Programmodul EMMI von den peripheren Dateien PB gelesen und in die Applikation-Taskstruktur LDU VD bzw. den Arbeitsspeicher des Rechners des Betriebstechnik-Endgerätes bzw. Personal Computers geladen. Mit Hilfe des Bedienertextinterpreter-Programmoduls EMMI werden die weiteren im Rahmen der Bedieneraufgabe definierten Programmschritte interpretiert und in die Arbeitstabelle TPT eingetragen. Wird in die Arbeitstabelle TPT wiederum ein betriebstechnischer Befehl eingetragen, der im Sinne einer Weiterverarbeitung sofort abzuarbeiten ist, wird - wie bereits erläutert - erneut das Textinterpreter-Programmodul MMI geladen, der betriebstechnische Befehl interpretiert und über die RS232-Schnittstelle RS232 an das Kommunikationssystem KS übermittelt.

Dieses Laden von Textinterpreter-, Bedienertextinterpreter-Programmodulen MMI, EMMI und das Laden der entsprechenden Betriebstechnik-Programmodule AMA im Kommunikationssystem KS wird in Abhängigkeit der Programmfolge des Bedieneraufgaben-Programmoduls BA solange durchgeführt, bis die Bedieneraufgabe beendet ist. Dieser vorhergehend beschriebene Informationsfluß innerhalb des Betriebstechnik-Endgerätes VBT bzw. Personal Computers und des Kommunikationssystems KS trifft für die Betriebsart On-Line-Modus zu. Dies bedeutet, daß das Suchen, Lesen und Einschreiben von Informationen direkt, d. h. aktuell, in der Datenbasis DB des Kommunikationssystems KS durchgeführt wird.

Im Off-Line-Modus dagegen wird eine im Betriebstechnik-Endgerät VBT bzw. Personal Computer eingerichtete Datenbasis DB einschließlich eines Datenbasiszugriffs-Programmoduls DBAR gelesen bzw. aktualisiert. Hierzu sind in der peripheren Datei PD des Betriebstechnik-Endgerätes zusätzlich alle Betriebstechnik-Programmodule AMA hinterlegt. Diese werden analog zum Laden im Kommunikationssystem KS bei Bedarf in die Applikation-Taskstruktur LDU-VD geladen. Nach Ausführung des betriebstechnischen Auftrages, z. B. Passwortlesen, wird das entsprechende Passwort mit Hilfe einer Meldung im virtuellen Applikationsprotokoll mit Hilfe des Koordinierung-Programmoduls SSC in die Betriebstechnik-Tabelle eingetragen und für die Verarbeitung in weiteren Programmodulen bereitgestellt. Im Off-Line-Modus kann eine Bedieneraufgabe - im Ausführungsbeispiel "Teilnehmerdaten löschen" - mit Hilfe der im Betriebstechnik-Endgerät VBT implementierten Betriebstechnik-Programmodule AMA, die jeweils in die Applikation-Taskstruktur LDU VD geladen werden, und der der ebenfalls implementierten Datenbasis DB einschließlich der Zugriffsroutine DBAR durchgeführt werden - siehe FIG 2 (11). Nach Beenden einer Bedieneraufgabe können die in der Datenbasis durchgeführten Änderungen gesammelt mit Hilfe des Koordinierung-Programmoduls SSC, des Transfer-Programmoduls TRC und des RS232-Schnittstellen-Programmoduls DH232 an das Kommunikationssystem KS übermittelt und dort mit Hilfe der bereits erläuterten Programmodule deren Datenbasis DB aktualisiert werden - siehe FIG 2 (9, 10).

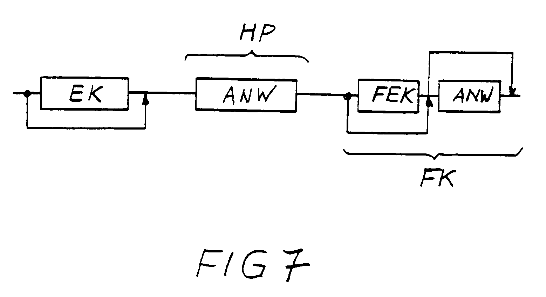

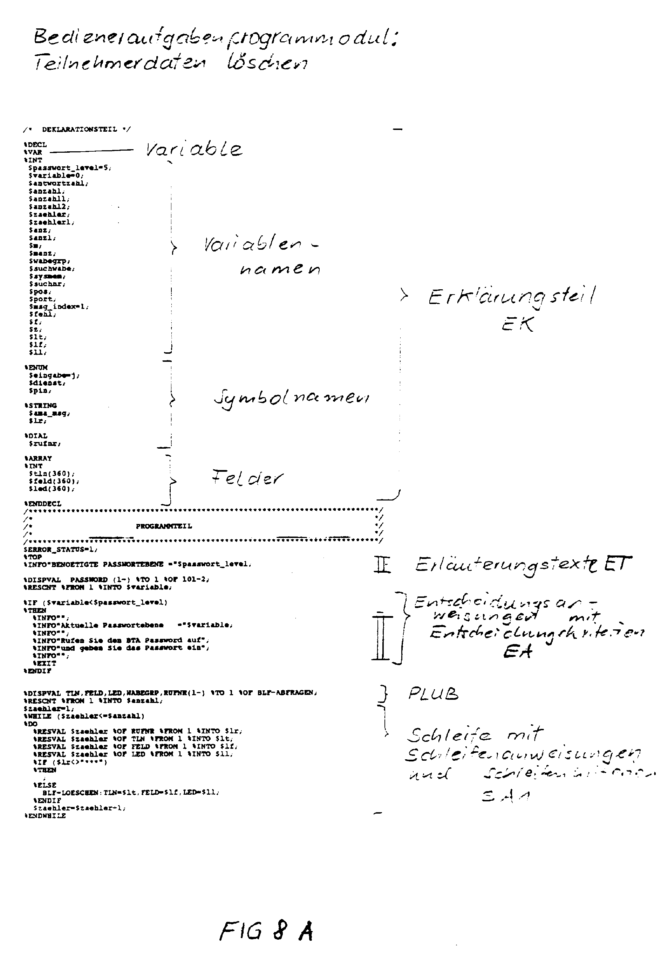

FIG 5 und FIG 6 zeigen den Aufbau des virtuellen Applikationsprotokolls VAP und des virtuellen Terminalprotokolls VTP. Sowohl das virtuelle Applikationsprotokoll VAP als auch das virtuelle Terminalprotokoll VTP weisen einen identisch realisierten Systemdatenkopfteil SDT sowie einen betriebstechnikspezifischen Datenkopfteil BDT auf. Im Systemdatenkopfteil SDT sind in einer definierten Reihenfolge Meldungsursprungs- und Meldungszieladressen sowie Meldungstyp angegeben.

Im betriebstechnikspezifischen Datenkopfteil BDT sind beispielsweise folgende Informationen enthalten:
- Session-Nr. SNR gibt die Nummer an, zu wessen "Session" diese Meldung gehört;
- Hintergrundnummer BNR zeigt die Hintergrundaufgabe an, zu dessen Nachrichtenübertragung diese Nachricht gehört;
- Anschlußnummer PNR und Dienstanzeige SRE für die Identifikation des Anschlusses des Kommunikationssystems KS und des daran angeschlossenen Betriebstechnik-Terminals VBT;
- Programmodulangabe LD, gibt das Programmodul der Koordinierung- oder Applikation-Taskstruktur LDU PD, LDU VD an, an welches die Nachricht zu übermitteln ist;
- Protokollidentifikation PI gibt die Art des Protokolls, d. h. virtuelles Applikationsprotokoll oder virtuelles Terminalprotokoll, an;
- weitere Informationen, wie Ursprungsinformation - gibt eine Normaleingabe oder eine Stapeleingabe an - oder Funktionstasteninformation FKS - gibt an, ob die "Session" mit einer Funktionstaste eingeleitet wurde - oder einer Maskensteuerinformation MSI - enthält Maskensteuerinformationen für das Videobetriebsterminal-Geräteprogramm DH VDT - oder einer Längeninformation LI - die die Länge des folgenden Datenfeldes in Bytes angibt - können an die vorhergehend erläuterten Informationen angefügt werden.

Im folgenden Datenfeld DF des virtuellen Applikationsprotokolls VAP - siehe FIG 5 - werden die Parameter dichtliegend eingetragen, damit bei der Übertragung zu einem anderen Programmodul nicht das gesamte Protokoll weitergegeben werden muß. Dieses Datenfeld DF enthält einen Parameterkopfteil PH sowie mehrere Parameterdeskriptoren PD1...PDn und jeweils den Parameterdeskriptoren PD1...PDn zugeordnete Wertefelder WF1...WFn.

Das Datenfeld DF des virtuellen Terminalprotokolls VTP - siehe FIG 6 - besteht aus einer sich abwechselnden Sequenz von Steuerinformationen FTZ und Dateninformationen DS1...DSn, wobei die Dateninformationen aus üblichen Stringelementen DS1...DSn, vorzugsweise im ASCI-II-Format, bestehen und die Steuerinformationen FTZ logische Steuerkriterien für die Ein- und Ausgabe solcher Stringelemente DS1...DSn, z. B. Positionieranweisungen, Abbildungsattribute und Feldzuordnungskriterien, enthalten. Das virtuelle Terminalprotokoll VTP dient als Datenschnittstelle eines virtuellen Terminalprotokolls, als das sich in dieser Schnittstelle jedes Terminal vom und zum Kommunikationssystem KS darstellt.

Mit Hilfe des virtuellen Terminalprotokolls VTP werden die am Videobetriebsterminal VBT eingegebenen Informationen bzw. Eingabestrings DS1...DSn an das Koordinierung-Programmodul SSC und anschließend zum Textinterpreter- oder Bedienertextinterpreter-Programmodul MMI, EMMI weitergeleitet.

Mit Hilfe des virtuellen Applikationsprotokolls VAP werden die Informationen zwischen den Programmodulen AMA, CCR, MMI, EMMI der Applikation-Taskstruktur LDU VD sowie mit den Programmodulen SSC, FILE CON, TRC der Koordinierung-Taskstruktur LDU PD ausgetauscht.

Die Übermittlung der Nachrichten vom Bedienertextinterpreter-Programmodul EMMI zum Textinterpreter-Programmodul MMI erfolgt im virtuellen Terminalprotokoll VPT, da die Protokollumsetzung virtuelles Terminalprotokoll VPT in virtuelles Applikationsprotokoll VAP anschließend mit Hilfe des Textinterpreter-Programmoduls MMI durchgeführt wird.

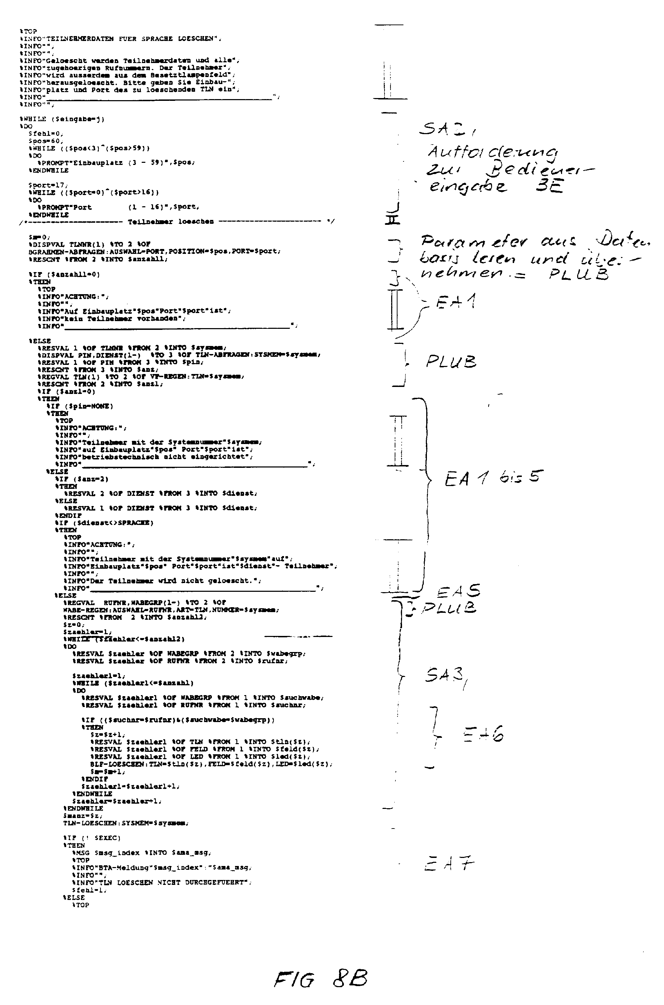

FIG 7 zeigt den prinzipiellen Aufbau eines Bedieneraufgaben-Programmoduls BA. Ein Bedieneraufgaben-Programmodul BA ist durch einen Erklärungsteil EK, durch ein Hauptprogrammteil HP und durch ein Funktionsteil FK bestimmt.

Im Erklärungsteil EK werden Variablen, Felder und symbolische Namen definiert. Die symbolischen Namen werden für wenig aussagekräftige Parametertexte der betriebstechnischen Befehle zugewiesen. Hierbei sind alle symbolischen Namen und Variablen, die im Bedieneraufgaben-Programmodul BA benutzt werden, im Erklärungsteil EK zu vereinbaren. Der Beginn von Variablen, Symbolen und Feldern wird durch unterschiedliche Zeichen dargestellt. Einer Variablen kann sowohl der Inhalt einer anderen Variablen als auch ein konstanter Wert zugewiesen werden. Die Wertezuweisung kann überall innerhalb eines Bedieneraufgaben-Programmoduls BA erfolgen.

Im Hauptprogrammteil HP bzw. Anweisungsteil ANW können betriebstechnische Befehle, Kontrollstrukturen und Variablenoperationen stehen. Hierbei definieren die Kontrollstrukturen die Reihenfolge, in der Aktionen durchgeführt werden. Für ein sinnvoll strukturiertes Bedieneraufgaben-Programmodul sind drei Anweisungstypen erforderlich: Entscheidungen, Schleifen mit Bewertung des Abbruchkriteriums am Anfang und die Auswahl aus einer Menge von möglichen Fällen. Die Schachtelungstiefe von Schleifen und Entscheidungen ist hierbei beliebig. Eine Grenze stellt die Stackgröße des Bedienertextinterpreter-Programmoduls EMMI dar. Für die Eingabe von Werten durch den Bediener innerhalb eines Ablaufes einer Bedieneraufgabe ist eine Eingabeanweisung vorgesehen. Die eingegebenen Werte werden hierbei einer Zielvariablen zugewiesen. Des weiteren sind spezielle Anweisungen für das Lesen von indirekten Werten aus der Datenbasis und Zugriffsanweisungen auf die Ergebnisse des indirekten Lesens der Datenbasis möglich. Das Einfügen von am Betriebstechnik-Endgerät anzuzeigender Erläuterungstexten bzw. Kommentaren in das Bedieneraufgaben-Programmodul wird mit Hilfe einer speziellen Anweisung (INFO) und den Texten vor- und nachgestalteter Programmsteuerzeichen, z. B. *Text*, bewerkstelligt.

Vor Ablauf des Bedieneraufgaben-Programmoduls BA wird die Korrektheit der Sprachsyntax überprüft sowie semantische Prüfungen durchgeführt. Bei Auftreten eines Fehlers werden spezielle Fehlermeldungen ausgegeben und der weitere Ablauf des Bedieneraufgaben-Programmoduls BA unterbunden.

Im Funktionsteil FK sind Funktionsunterprogramme definiert, die im Anweisungsteil ANW mit Hilfe eines Ausdrucks aufgerufen werden. Dieser Funktionsteil FK ist ebenfalls durch einen Funktionserklärungsteil FEK und durch einen Anweisungsteil ANW bestimmt.

In diesem Funktionserklärungsteil FEK sind wiederum die im Anweisungsteil ANW verwendeten Variablen, Namen und Felder definiert. Der Anweisungsteil ANW enthält analog zum Hauptprogramm HP die eine bestimmte Funktion definierenden Anweisungen. Aufgerufen wird eine derart strukturierte Funktion im Hauptprogramm HP durch den Funktionsnamen und einen entsprechenden Parametersatz.

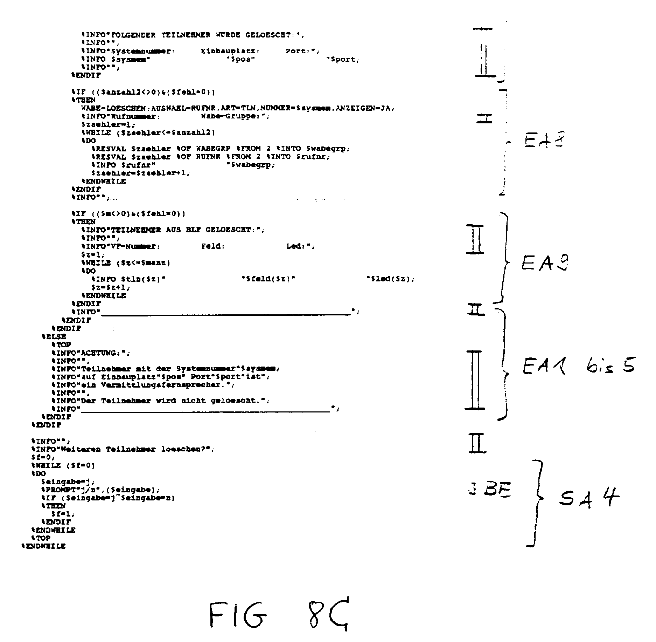

In FIG 8 A bis 8 C ist das Programmlisting des im Ausführungsbeispiel angegebenen Bedieneraufgaben-Programmoduls BA-TL "Teilnehmerdaten löschen" dargestellt. In diesem Programmlisting sind die vorhergehend angegebenen Programmteile sowie die in diesem verwendeten Variablen, Felder, Anweisungen, u.s.w., eingetragen.

Nach dem Laden dieses Bedieneraufgaben-Programmoduls in die Applikation-Taskstruktur LDU wird die Passwortebene überprüft. Stimmt die Passwortebene nicht überein, wird die Bedieneraufgabe abgebrochen. Nach der Initialisierung des Bedieneraufgaben-Programmoduls BA-TL wird der Bediener aufgefordert, Einbauplatz und Anschluß des zu löschenden Teilnehmers einzugeben. Als Ergebnis dieser Eingabe wird angezeigt, ob der Teilnehmer gelöscht werden konnte. Konnte dieser nicht gelöscht werden, so wird an der Bedieneroberfläche, d. h. am Bildschirm des Videobetriebsterminals VBT die Begründung in dem Bediener verständlichen Texten angezeigt. Gründe für das Nichtlöschen können beispielsweise sein: Der Teilnehmer ist betriebstechnisch nicht eingerichtet, der zu löschende Teilnehmer ist ein Vermittlungsfernsprecher, Teilnehmer ist in einem Sammelanschluß, usw. Dieser Teilnehmer kann erst nach Beheben der entsprechenden Ursache gelöscht werden.

## Patentansprüche

1. Modular strukturiertes digitales Kommunikationssystem zur Verbindung von Endgeräten in Kommunikationsnetzen mit einem zentralen Systemrechner mit einer Systemdatenbasis und mit zumindest einem Multitasking-Betriebssystem
- mit in einer Leitungstechnik-Taskstruktur (DH) eingebetteten endgeräteartenspezifischen Betriebstechnik-Geräteprogrammodulen (DH VDT, AMF, DH232),
. zum Generieren betriebstechnischer Befehle bzw. Kommandos aus an Endgeräten und/oder Betriebstechnik-Endgeräten vorgenommenen bedieneroberflächenbezogenen Eingaben und/oder
. zum Generieren bedieneraufgabenbezogener betriebstechnischer Informationen aus an programmgesteuerten Betriebstechnik-Endgeräten (VBT) eingegebenen maskenorientierten Eingaben,
. zur Abgabe von aus betriebstechnischen Meldungen abgeleiteten endgeräteartspezifischen bedieneroberflächenbezogenen Einstelldaten für die Endgeräte und/oder Betriebstechnik-Endgeräte (VBT) und/oder
. zur Abgabe von aus bedieneraufgabenbezogenen betriebstechnischen Informationen abgeleiteten maskenorientierten betriebstechnischen Informationen für programmgesteuerte Betriebstechnik-Endgeräte (VBT) und
. zur Ansteuerung peripherer Dateien (PD) im Sinne des Ladens systemresidenter Programmodule und im Sinne des Ladens nicht residenter betriebstechnikeingabenabhängiger Programmodule,
- mit einem in einer betriebstechnischen Koordinierung-Taskstruktur (LDU PD) eingebetteten Koordinierung-Programmodul (SSC) zur Steuerung des betriebstechnischen Informations- und Datenflusses,
- mit zumindest einem in einer Applikation-Taskstruktur (LDU VD) eingebetteten und einem Applikation-Taskorganisationsprogramm hierarchisch untergeordneten Betriebstechnik-Programmodul (AMA),
. wobei zumindest einem Teil der Betriebstechnik-Programmodule (AMA) jeweils individuell über definierte Datenbasis-Zugriffsroutinen (DBAR) die Datenbasis (DB) zugänglich ist,
- und das (Multitasking-Betriebssystem) eine programmorientierte Busstruktur mit einem kommunikationsdienste- und endgeräteartenunabhängig definierten Übertragungsprotokoll - virtuelles Terminal-Protokoll (VTP) - für zwischen der Leitungstechnik-Taskstruktur (DH) und der Koordinierungs-Taskstruktur (LDU PD) übertragene Meldungen und mit einem kommunikationsdienste- und endgeräteartenunabhängig definierten, eine zumindest annähernd steuerzeichenfreie, gedrängte Datenanordnung vorsehenden weiteren Übertragungsprotokoll - virtuelles Applikationsprotokoll (VAP) - für innnerhalb der Applikation-Taskstruktur (LDU VD) und zwischen dieser und der Koordinierung-Taskstruktur (LDU PD) übertragene Meldungen aufweist, und
- mit einem Textinterpreter-Programmodul (MMI) zur Konvertierung von betriebstechnischen Informationen in einem der beiden Übertragungsprotokolle (VTP, VAP) in Meldungen im jeweils anderen Übertragungsprotokoll (VTP, VAP) und
- mit einem zusätzlichen Bedienertextinterpreter-Programmodul (EMMI) zur Konvertierung bedieneraufgabenbezogener betriebstechnischer Informationen in betriebstechnische Meldungen bzw. Befehle, wobei die Konvertierung je Bedieneraufgabe durch ein von den peripheren Dateienen (PD) geladenes Bedieneraufgabenprogrammodul (BA) gesteuert wird.

2. Kommunikationssystem nach Anspruch 1,
**dadurch gekennzeichnet,**
daß das Textinterpreter- und das Bedienertextinterpreter-Programmodul (MMI, EMMI) in die betriebstechnische Applikations-Taskstruktur (LDU VD) eingefügt sind.

3. Kommunikationsanlage nach mindestens einem der vorhergehenden Ansprüche,
**dadurch gekennzeichnet,**
daß in die betriebstechnische Koordinierung-Taskstruktur (LDU PD) ein einem Dateiverwaltung-Taskorganisationsprogramm hierarchisch untergeordnetes Dateiverwaltung-Programmodul (FILE CON) zur Steuerung des Zugangs zu peripheren Dateien (PD) eingefügt ist.

4. Kommunikationssystem nach Anspruch 3,
**dadurch gekennzeichnet,**
daß in die Leitungstechnik-Taskstruktur (DH) ein Speicher-Programmodul (AMF) zur Steuerung von Such-, Lade- und Schreibaufträgen für die peripheren Dateien (PD) aufnehmende Speicher (PSP) eingefügt ist.

5. Kommunikationssystem nach mindestens einem der vorhergehenden Ansprüche,
**dadurch gekennzeichnet,**
daß in die betriebstechnische Koordinierung-Taskstruktur (LDU PD) ein Transferprogrammodul (TRC) zur Steuerung einer RS 232-Schnittstellensignalisierung im Sinne des Übermittelns bedieneraufgabenbezogener betriebstechnischer Informationen und betriebstechnischer Meldungen und Befehle eingefügt ist.

6. Kommunikationssystem nach Anspruch 5,
**dadurch gekennzeichnet,**
daß in die Leitungstechnik-Taskstruktur (DH) ein RS232-Schnittstellen-Programmodul (RS232) zur physikalischen Konvertierung einer RS232-Schnittstelle im Sinne des Übermittelns bedieneraufgabenbezogener betriebstechnischer Informationen und betriebstechnischer Meldungen und Befehle eingefügt ist.

7. Kommunikationssystem nach mindestens einem der vorhergehenden Ansprüche,
**dadurch gekennzeichnet,**
daß in die Leitungstechnik-Taskstruktur ein Videoterminal-Geräteprogrammodul (DH VDT) zur Konvertierung von an einem Videobetriebsterminal (VBT) vorgenommenen Eingaben bzw. Ausgaben in bedieneraufgabenbezogene betriebstechnische Informationen oder betriebstechnische Meldungen bzw. Befehle eingefügt ist.

8. Kommunikationssystem nach mindestens einem der vorhergehenden Ansprüche,
**dadurch gekennzeichnet,**
daß in die betriebstechnische Applikation-Taskstruktur (LDU VD) ein einem Applikationsverbindungs-Taskorganisationsprogramm hierarchisch untergeordnetes Applikationsverbindungs-Programmodul (CCR) zum Aufbau und zur Verwaltung der Verbindungen des Koordinierungs-Programmoduls (SSC) mit einem der Betriebstechnik-Programmodule (AMA, MMI, EMMI) eingefügt ist.

9. Kommunikationssystem nach Anspruch 8,
**dadurch gekennzeichnet,**
daß das Applikationsverbindungs-Programmodul (CCR) derart strukturiert ist, daß es das Vorhandensein bestimmter Betriebstechnik-Programmodule (AMA, MMI, EMMI) in der betriebstechnischen Applikation-Taskstruktur prüft.

10. Kommunikationssystem nach Anspruch 2,
**dadurch gekennzeichnet,**
daß dem Textinterpreter-Programmodul (MMI) und dem zusätzlichen Bedienertextinterpreter-Programmodul (EMMI) zur Konvertierung der protokollindividuellen betriebstechnischen Meldungen, Befehle und Informationen jeweils Parameter- und Texttabellen (TPT) zugeordnet sind.

11. Kommunikationssystem nach Anspruch 10,
**dadurch gekennzeichnet,**
daß die Parameter- und Texttabellen (TPT) in Abhängigkeit von aktuell zu interpretierenden betriebstechnischen Befehlen und Meldungen bzw. bedieneraufgabenbezogenen betriebstechnischen Anweisungen mit Hilfe des Koordinierung-Programmodul (SSC), des Applikationsverbindung-Programmoduls (CCR), des Dateiverwaltung-Programmoduls (FILE CON) und des Speicherprogrammoduls (AMF) von peripheren Text- und Parameterdateien (PD) geladen werden.

12. Kommunikationssystem nach mindestens einem der vorhergehenden Ansprüche,
**dadurch gekennzeichnet,**
daß in einem Bedieneraufgaben-Programmodul (BA) mehrere betriebstechnische Befehle bzw. Kommandos und gegebenenfalls methodische Verknüpfungen der betriebstechnischen Befehle und Parameter (P) sowie Erläuterungsinformationen (ET) zusammengefaßt sind, wobei der überwiegende Teil der betriebstechnischen Parameter (P) vorspezifiziert ist.

13. Kommunikationssystem nach Anspruch 12,
**dadurch gekennzeichnet,**
daß bei einem Bedieneraufgaben-Programmablauf vom Kommunikationssystem (KS) ermittelte oder am Betriebstechnik-Endgerät (VBT) eingegebene Parameter (P) in die relevanten, nachfolgend auszuführenden betriebstechnischen Befehle bzw. Meldungen oder bedieneraufgabenbezogenen betriebstechnischen Informationen eingefügt werden.

14. Kommunikationssystem nach mindestens einem der vorhergehenden Ansprüche 12 oder 13,
**dadurch gekennzeichnet,**
daß methodische Verknüpfungen der betriebstechnischen Befehle (ANW) bzw. Meldungen sowie Parameter (P) im Rahmen einer Bedieneraufgabe mit Hilfe von in den Bedieneraufgaben-Programmodulen (BA) angegebenen arithmetischen Operationsanweisungen (ANW), Schleifenanweisungen (SA) und Verzweigungsanweisungen (EA) gesteuert werden.

15. Kommunikationssystem nach mindestens einem der vorhergehenden Ansprüche 12 bis 14,
**dadurch gekennzeichnet,**
daß mit Hilfe des Bedienertextinterpreter-Programmoduls (EMMI) die in diesen angegebenen, die einzugebenden Parameter (P) sowie betriebstechnischen Befehle bzw. Meldungen erläuternden Erläuterungsinformationen (ET) an die Bedieneroberfläche des Betriebstechnik-Endgerätes (VBT) steuerbar und dort anzeigbar sind.

16. Kommunikationssystem nach mindestens einem der vorhergehenden Ansprüche 12 bis 15,
**dadurch gekennzeichnet,**
daß ein Bedieneraufgaben-Programmodul durch einen die benutzten Variablen, Symbolnamen und Felder definierenden Erklärungsteil (EK) durch einen die bedieneraufgabenbezogenen Anweisungen enthaltenden Anweisungsteil (ANW) und durch einen aufrufbare Funktionen enthaltenden Funktionsteil (FK) bestimmt ist.

17. Kommunikationssystem nach mindestens einem der vorhergehenden Ansprüche 7 bis 16,
**dadurch gekennzeichnet,**
daß das Betriebstechnik-Endgerät (VBT) derart strukturiert ist, daß an einer individuell maskenkonfigurierbaren Bedieneroberfläche des Betriebstechnik-Endgerätes (VBT) die Parameter (P) in einem listenorientierten Parametereingabebereich (PEB), die Bedienaufgabenanweisungen in einem Bedienaufgabenbereich (BAB), die betriebstechnischen Befehle und Parameter in einem Eingabebereich (EBB), die betriebstechnischen Meldungen in einem Ausgabebereich (ABB), die Funktionstasteninformationen in einem Funktionstastenbereich (FT1...FTn) und die betriebstechnischen Fehlermeldungen in einem Fehlerbereich (FAB) eingebbar bzw. anzeigbar sind.

## Claims

1. Modularly structured digital communications system for connecting terminals in communications networks to a central system computer having a system database and at least one multitasking operating system
- having terminal-type-specific operating hardware device program modules (DH VDT, AMF, DH232) embedded in a line-oriented task structure (DH),
. for generating operations-oriented instructions or commands from operator-interface-related inputs carried out at terminals and/or operations-oriented terminals and/or
. for generating operator-task-related operations-oriented information from mask-oriented inputs input at program-controlled operations-oriented terminals (VBT),
. for outputting terminal-type-specific operator-interface-related setting data derived from operations-oriented messages for the terminals and/or operations-oriented terminals (VBT) and/or
. for outputting mask-oriented operations-oriented information derived from operator-task-related operations-oriented information for program-controlled operations-oriented terminals (VBT) and
. for driving peripheral files (PD) so as to load system-resident program modules and so as to load non-resident program modules which depend on operations-oriented input,
- having a coordination program module (SSC) embedded in an operations-oriented coordination task structure (LDU PD) for controlling the operations-oriented flow of information and data,
- having at least one operations-oriented program module (AMA) embedded in an application task structure (LDU VD) and hierarchically subordinate to an application task organization program,
. the database (DB) being individually accessible for at least a part of the operations-oriented program modules (AMA) in each case via defined database access routines (DBAR)
- and the (multitasking operating system) having a program-oriented bus structure which has a transmission protocol, defined in a manner independent of communication services and terminal types - virtual terminal protocol (VTP) - for messages transmitted between the line-oriented task structure (DH) and the coordination task structure (LDU PD) and having a further transmission protocol - virtual application protocol (VAP) - defined in a manner independent of communication services and terminal types and providing an at least approximately control character-free, compressed data arrangement for messages transmitted within the application task structure (LDU VD) and between said structure and the coordination task structure (LDU PD), and
- having a text interpreter program module (MMI) for converting operations-oriented information in one of the two transmission protocols (VTP, VAP) into messages in the respectively other transmission protocol (VTP, VAP) and
- having an additional operator text interpreter program module (EMMI) for converting operator-task-related operations-oriented information into operations-oriented messages or instructions, the conversion for each operator task being controlled by an operator task program module (BA) loaded from the peripheral files (PD).

2. Communications system according to Claim 1, characterized in that the text interpreter and the operator text interpreter program module (MMI, EMMI) is inserted into the operations-oriented application task structure (LDU VD).

3. Communications unit according to at least one of the preceding claims, characterized in that a file management program module (FILE CON), hierarchically subordinate to a file management task organization program, for controlling the access to peripheral files (PD) is inserted into the operations-oriented coordination task structure (LDU PD).

4. Communications system according to Claim 3, characterized in that a memory program module (AMF) for controlling search, load and write commands for the memories (PSP) receiving the peripheral files (PD) is inserted into the line-oriented task structure (DH).

5. Communications system according to at least one of the preceding claims, characterized in that a transfer program module (TRC) for controlling an RS 232 interface signalling so as to transmit operator-task-related operations-oriented information and operations-oriented messages and instructions is inserted into the operations-oriented coordination task structure (LDU PD).

6. Communications system according to Claim 5, characterized in that an RS232 interface program module (RS232) for physically converting an RS232 interface so as to transmit operator-task-related operations-oriented information and operations-oriented messages and instructions is inserted into the line-oriented task structure (DH).

7. Communications system according to at least one of the preceding claims, characterized in that a video terminal device program module (DH VDT) for converting inputs or outputs undertaken at a video operating terminal (VBT) into operator-task-related operations-oriented information or operations-oriented messages or instructions is inserted into the line-oriented task structure.

8. Communications system according to at least one of the preceding claims, characterized in that an application link program module (CCR), hierarchically subordinate to an application link task organization program, for establishing and managing the links of the coordination program module (SSC) with one of the operations-oriented program modules (AMA, MMI, EMMI) is inserted into the operations-oriented application task structure (LDU VD).

9. Communications system according to Claim 8, characterized in that the application link program module (CCR) is structured in such a manner that it tests the presence of specific operations-oriented program modules (AMA, MMI, EMMI) in the operations-oriented application task structure.

10. Communications system according to Claim 2, characterized in that parameter and text tables (TPT) are in each case assigned to the text interpreter program module (MMI) and the additional operator text interpreter program module (EMMI) for converting protocol-specific operations-oriented messages, instructions and information.

11. Communications system according to Claim 10, characterized in that the parameter and text tables (TPT) are loaded from peripheral text and parameter files (PD) by means of the coordination program module (SSC), the application link program module (CCR), the file management program module (FILE CON) and the memory program module (AMF) as a function of operations-oriented instructions and messages or operator-task-related operations-oriented instructions, which are currently to be interpreted.

12. Communications system according to at least one of the preceding claims, characterized in that a plurality of operations-oriented instructions or commands and possibly methodic logic operations of the operations-related instructions and parameters (P) as well as explanatory information (ET) are comprised in an operator task program module (BA), the predominant part of the operations-oriented parameters (P) being predetermined.

13. Communications system according to Claim 12, characterized in that parameters (P) determined by the communications system (KS) or input at the operations-oriented terminal (VBT) are inserted in the case of an operator task program sequence into the relevant, subsequently to be executed operations-oriented instructions or messages or operator-task-related operation-oriented information.

14. Communications system according to at least one of the preceding Claims 12 or 13, characterized in that methodic logic operations of the operations-oriented instructions (ANW) or messages as well as parameters (P) are controlled in the framework of an operator task by means of arithmetic operation instructions (ANW), loop instructions (SA) and branch instructions (EA) specified in the operator task program modules (BA).

15. Communications system according to at least one of the preceding Claims 12 to 14, characterized in that by means of the operator text interpreter program module (EMMI) the explanatory information (ET), explaining the parameters (P) to be input as well as the operations-oriented instructions or messages, and which are specified in said operator text interpreter program modules can be controlled to the operator interface of the operations-oriented terminal (VBT) and indicated there.

16. Communications system according to at least one of the preceding Claims 12 to 15, characterized in that an operator task program module is specified by an explanatory part (EK) defining the used variables, symbol names and fields, by an instruction part (ANW) containing the operator-task-related instructions, and by a function part (FK) which contains functions that can be called up.

17. Communications system according to at least one of the preceding Claims 7 to 16, characterized in that the operations-oriented terminal (VBT) is structured in such a manner that at an operator interface, whose mask can be configured individually, of the operations-oriented terminal (VBT) the parameters (P) can be input or displayed in a list-oriented parameter input area (PEB), the operation task instructions in an operation task area (BAB), the operations-oriented instructions and parameters in an input area (EBB), the operations-oriented messages in an output area (ABB), the function key information in a function key area (FT1...FTn) and the operations-oriented error messages in an error area (FAB).

## Revendications

1. Système de communication numérique à structure modulaire pour la liaison de terminaux dans des réseaux de communication à un ordinateur central du système, comportant une base de données du système et au moins un système d'exploitation multi-tâches, comportant
- des modules de programmes d'appareils d'exploitation (DH VDD, AMF, DH232), qui sont spécifiques aux types de terminaux et sont insérés dans une structure (DH) d'exécution de tâches de la technique des lignes,
. pour la production d'instructions ou d'ordres d'exploitation à partir d'entrées qui sont exécutées au niveau des terminaux et/ou des terminaux d'exploitation et sont rapportés à la surface des utilisateurs, et/ou
. pour produire des informations d'exploitation, qui sont rapportées aux tâches des utilisateurs, à partir d'entrées qui sont axées sur des masques et sont introduites au niveau de terminaux (VBT) d'exploitation, qui sont commandés par programme,
. pour la délivrance de données de réglage spécifiques aux types de terminaux et rapportées à la surface des utilisateurs et dérivées des signalisations d'exploitation, pour les terminaux et/ou les terminaux d'exploitation (VBT), et/ou
. pour la délivrance d'informations d'exploitation, qui sont axées sur des masques et sont dérivées d'informations d'exploitation rapportées à des tâches d'utilisateurs, pour des terminaux d'exploitation (VBT) commandés par programme, et
. pour la commande de fichiers périphériques (PD) dans le sens du chargement de modules de programme résidants dans le système et dans le sens du chargement de modules de programme non résidants, qui dépendent des entrées d'exploitation,
- un module de programme de coordination (SSC), inséré dans une structure (LDU PD) de tâches de coordination d'exploitation pour la commande du flux d'informations et du flux de données d'exploitation,
- au moins un module de programme d'exploitation (AMA), inséré dans une structure (LDU VD) de tâches d'application et subordonné du point de vue hiérarchique à un programme d'organisation de tâches d'application,
. la base de données (DB) étant accessible, au moins pour une partie des modules de programme d'exploitation (AMA), respectivement et individuellement à l'aide de sous-programmes définis (DBAR) d'accès à la base de données, et
- le système d'exploitation multi-tâches possède une structure de bus axée sur le programme et comportant un protocole de transmission défini indépendamment des services de communication et des types de terminaux - protocole virtuel de terminal (DTP) - pour des signalisations transmises entre la structure (DH) d'exécution de tâches de la technique des lignes et la structure (LDU PD) d'exécution de tâches de coordination, et un autre protocole de transmission défini indépendamment des services de communication et des types de terminaux, qui prévoit une disposition ramassée des données, au moins approximativement exempte de signaux de commande - protocole virtuel d'application (VAP) - pour des signalisations transmises à l'intérieur de la structure (LDU VD) de transmission de tâches d'application et entre cette structure et la structure (LDU PD) d'exécution de tâches de coordination, et
- un module de programme interpréteur de texte (MMI) pour convertir des informations d'exploitation dans l'un des deux protocoles de transmission (VTP, VAP), en des signalisations dans l'autre protocole respectif de transmission (VTP, VAP), et
- un module supplémentaire de programme interpréteur de texte de l'utilisateur (MMI) pour convertir des informations d'exploitation, qui sont rapportées à des tâches d'utilisateurs, en des signalisations ou instructions d'exploitation, la conversion étant commandée pour chaque tâche d'utilisateur, par un module de programme de tâche d'utilisateur (BA) chargé par les fichiers périphériques (PD).

2. Système de communication suivant la revendication 1, caractérisé par le fait que le module de programme interpréteur de texte et le module de programme interpréteur de texte d'utilisateur (MMI, EMMI) sont insérés dans la structure (LDU VD) d'exécution de tâches d'application d'exploitation.

3. Installation de communication suivant au moins l'une des revendications précédentes, caractérisée par le fait que dans la structure (LDU PD) d'exécution de tâches de coordination d'exploitation est inséré un module de programme de gestion de fichiers (FILE CON) qui est subordonné hiérarchiquement à un programme de gestion de fichiers d'organisation des tâches, pour la commande de l'accès à des fichiers périphériques (PD).

4. Système de communication suivant la revendication 3, caractérisé par le fait que dans la structure (DH) d'exécution de tâches de la technique des lignes est inséré un module de programme de mémoire (AMF) servant à commander des ordres de recherche, de chargement et d'enregistrement pour des mémoires (PSP) recevant les fichiers périphériques (PD).

5. Système de communication suivant au moins l'une des revendications précédentes, caractérisé par le fait que dans la structure (LDU PD) d'exécution de tâches de coordination d'exploitation est inséré un module de programme de transfert (TRC) servant à commander une signalisation d'interface RS 232 dans le sens de la retransmission d'informations d'exploitation rapportées à des tâches d'utilisateurs et de signalisations et d'instructions d'exploitation.

6. Système de communication suivant la revendication 5, caractérisé par le fait que dans la structure (DH) d'exécution des tâches de la technique des lignes est inséré un module de programme d'interface RS232 (RS232) pour la conversion physique d'une interface RS232 dans le sens de la retransmission d'informations d'exploitation rapportées à des tâches d'utilisation et de signalisation et d'instructions d'exploitation.

7. Système de communication suivant au moins l'une des revendications précédentes, caractérisé par le fait que dans la structure d'exécution de tâches de la technique des lignes est inséré un module de programme d'appareil terminal vidéo (DH VDT) pour convertir des entrées ou sorties réalisées au niveau d'un terminal d'exploitation vidéo (VBT) en des informations d'exploitation rapportées à des tâches d'utilisateurs ou en des signalisations ou instructions d'exploitation.

8. Système de communication suivant au moins l'une des revendications précédentes, caractérisé par le fait que dans la structure (LDU VD) d'exécution de tâches d'application d'exploitation est inséré un module de programme de liaison d'application (CCR) subordonné hiérarchiquement à un programme d'organisation des tâches de liaison d'application, pour l'établissement et la gestion du module de programme de coordination (SCC) avec l'un des modules de programmes d'exploitation (AMA, MMI, EMMI).

9. Système de communication suivant la revendication 8, caractérisé par le fait que le module de programme de liaison d'application (CCR) est structuré de telle sorte qu'il contrôle la présence de modules déterminés de programmes d'exploitation (AMA, MMI, EMMI ) dans la structure d'exécution des tâches d'application d'exploitation.

10. Système de communication suivant la revendication 2, caractérisé par le fait qu'au module de programme d'interpréteur de texte (MMI) et au module de programme supplémentaire d'interpréteur de texte d'utilisateur (EMMI) sont associées respectivement des tables de paramètres et des tables de texte (TPT), pour la conversion des signalisations d'exploitation, des instructions et des informations, qui sont prévues individuellement pour chaque protocole.

11. Système de communication suivant la revendication 10, caractérisé par le fait que les tables de paramètres et les tables de textes (TPT) sont chargées en fonction d'instructions et de signalisations d'exploitation, qui doivent être actuellement interprétées ou d'indications d'exploitation, qui sont rapportées à des tâches d'utilisateurs, à l'aide du module de programme de coordination (SCC), du module de programme de liaison d'application (CCR), du module de programme de gestion de fichiers (FILE CON) et du module de programme de mémoire (AMF) de fichiers périphériques de textes et de paramètres (PD).

12. Système de communication suivant au moins l'une des revendications précédentes, caractérisé par le fait que dans un module de programme de tâches d'utilisateurs (BA) sont rassemblés plusieurs instructions ou ordres d'exploitation et éventuellement des combinaisons méthodiques des instructions et paramètres d'exploitation (P) ainsi que des informations d'explications (ED), la majeure partie des paramètres d'exploitation (P) étant spécifiée par avance.

13. Système de communication suivant la revendication 12, caractérisé par le fait que des paramètres (P) déterminés par le système de communication (KS) lors d'une exécution d'un programme de tâches d'utilisateur ou introduits dans le terminal d'exploitation (VBT) sont insérés dans les instructions de signalisation d'exploitation concernées, qui doivent être exécutées ensuite, ou dans des informations d'exploitation, qui sont rapportées à des tâches d'utilisateurs.

14. Système de communication suivant au moins l'une des revendications précédentes 12 ou 13, caractérisé par le fait que des combinaisons méthodiques des instructions d'exploitation (ANW) ou de signalisations d'exploitation ainsi que de paramètres d'exploitation (P) sont commandées, dans le cadre d'une plage de commande, à l'aide d'instructions d'opérations arithmétiques (ANW) indiquées dans les modules de programme de tâches d'utilisateurs (BA), d'instructions de boucle (SA) et d'instructions de ramification (EA).

15. Système de communication suivant au moins l'une des revendications précédentes 12 à 14, caractérisé par le fait qu'à l'aide du module de programme interpréteur du texte d'utilisateur (EMMI), les informations d'explications (ET), qui sont indiquées dans ce module et expliquent les paramètres (P) devant être introduits ainsi que les instructions ou signalisations d'exploitation, peuvent être commandées au niveau de la surface d'utilisateur du terminal d'exploitation (VBT) et peuvent y être affichées.

16. Système de communication suivant au moins l'une des revendications précédentes 12 à 15, caractérisé par le fait qu'un module de programme de tâches d'utilisateurs est déterminé par une partie d'explication (EK), qui définit les variables, noms de symboles et zones utilisées, est déterminé par une partie d'instructions (ANW), qui comporte les instructions rapportées aux tâches d'utilisateurs, et par une partie fonctions (FK), qui comporte des fonctions pouvant être appelées.

17. Système de communication suivant au moins l'une des revendications précédentes 7 à 16, caractérisé par le fait que le terminal d'exploitation (VBT) est structuré de telle façon qu'au niveau de la surface d'utilisateur, pouvant être configurée individuellement par masques, du terminal d'exploitation (VBT), des paramètres (P) peuvent être introduits ou affichés dans une zone (PEB) d'entrée de paramètres, basée sur une liste, les instructions de tâches d'exploitation peuvent être introduites ou affichées dans une zone de tâches d'exploitation (BAB), les instructions et paramètres d'exploitation peuvent être introduits et affichés dans une zone d'entrée (EBB), les signalisations d'exploitation peuvent être introduites et affichées dans une zone de sortie (ABB), les informations de touches fonctionnelles peuvent être introduites et affichées dans une zone de touches fonctionnelles (FT1...FTn) et les signalisations d'erreurs d'exploitation peuvent être introduites ou affichées dans une zone d'erreurs (FAB).
